# EUROPEAN PATENT SPECIFICATION

(11) **EP 4 288 833 B1**
(45) Date of publication and mention of the grant of the patent: **03.07.2024**
(21) Application number: 22713651.2
(22) Date of filing: 11.03.2022
(51) Int. Cl.: G02F 1/167, G02F 1/16761

(54) **DYNAMIC GLAZING COMPRISING A SUBSTRATE WITH INTERLACED MESH ELECTRODES**
DYNAMISCHE VERGLASUNG MIT EINEM SUBSTRAT MIT VERSCHACHTELTEN GITTERELEKTRODEN
VITRAGE DYNAMIQUE COMPRENANT UN SUBSTRAT À ÉLECTRODES MAILLÉES ENTRELACÉES

(30) Priority: 12.03.2021 NL 2027746
(43) Date of publication of application: 13.12.2023
(73) Proprietor: eLstar Dynamics Patents B.V., 3235 CD Rockanje (NL)
(72) Inventor: MASSARD, Romaric Mathieu, 5651 GW Eindhoven (NL); MITIOGLU, Anatolie, 5651 GW Eindhoven (NL); THOMAS, David Richard, 06650 Opio (FR); SLACK, Anthony John, 83510 Lorgues (FR)
(74) Representative: DeltaPatents B.V.
(86) International application number: PCT/EP2022/056315
(87) International publication number: WO 2022/189617

(56) References cited:
- US-A1- 2005 185 104
- US-A1- 2020 066 924
- US-A1- 2020 249 538

## Description

### FIELD

The presently disclosed subject matter relates to dynamic glazing, a light modulator, a substrate, a method of manufacturing a substrate, a method of manufacturing a light modulator, a dynamic glazing method, a computer readable medium.

### BACKGROUND

US patent application 11/041579, `Optically active glazing', publication number US20050185104 A1, discloses known optically active glazing based on the dielectrophoretic effect.

The known system comprises two parallel plates, made from a transparent dielectric material such as glass or a plastic material. The internal volume defined between the plates is subdivided into a plurality of small independent volumes or individual cells that are filled with a dielectric liquid. The liquid contains a suspension of particles of a dielectric material. The facing faces of the two plates carry electrodes facing each other. The electrodes are connected to an electrical power supply associated with a control means.

The electrodes of each plate are formed by combs that are interleaved into one another in pairs. The electrodes of two interleaved combs are capable of taking up electrical voltages of polarities that are identical or opposite. With a suitable voltage on the electrodes the particles can be concentrated at different locations between the electrodes to give the system either a transparent or an opaque appearance.

There are various drawbacks associated with the known system. For example, it is desirable if the electric field across the substrates are homogeneous. Another drawback of the known system is that in the opaque configuration, a uniform appearance of the glazing is desired. This aspect can also impact safety. For example, if the glazing is configured half-way between opaque and transparent, then a lack of uniformity can be confusing or distracting. Yet another drawback is that when the glazing transitions from an opaque configuration to transparent configuration, it is desired that the transition proceeds at a uniform speed across the glazing.

Moreover, also the expected lifetime of the known device is limited. After repeated cycles of changing the transparency, an electrode can break. If that happens, part of the known device will cease functioning. A problem of breaking electrode lines can also occur during manufacturing. A break in the long narrow lines employed in conventional dynamic glazing impacts the yield of the manufacturing.

Reference is made to US patent application 2020/249538 with title 'OPTICAL MODULATOR' and the following abstract:
The present disclosure is in the field of an electrophoretic device for switching between a transparent and non-transparent mode, comprising a fluid and particles, electrodes for moving said particles, and comprising various further elements, as well as uses thereof, in particular as a window blind.

Reference is made to US patent application 2020/066924 A1 with title 'OPEN ELECTRODES FOR IN-PLANE FIELD GENERATION' and the following abstract:
An electrode film includes a first electrode pattern having a first set of parallel conductive electrodes and a second electrode pattern having a second set of parallel conductive electrodes disposed on a surface of a transparent film. The conductive electrodes in the first and second electrode patterns are conductive mesh patterns including a pattern of open areas and are arranged in an interlaced pattern. The first and second electrode patterns are configured to be connected to respective sources of electrical power supplying respective waveforms to generate a time-varying electric field pattern above a surface of the electrode film.

### SUMMARY

It would be advantageous to have an improved dynamic glazing that addresses these and other problems. The present invention provides a substrate for use in an electrophoretic light modulator as defined in claim 1. The dynamic glazing is provided comprising the light modulator which comprises a first substrate and a second substrate as defined in claim 1 which second substrate comprises at least two mesh electrodes. The mesh electrodes on the substrate are interlaced, also referred to as interdigitated, so that an electric field can be created between the mesh electrodes on the substrate by applying an electric potential or current to the mesh electrodes. In an interdigitated pattern, a main line lies directly between two other main lines of a different mesh electrode or electrodes (or if at the edge, next to a single main line of a different mesh electrode). Such electric fields are used to control the movement of charged particles between the substrates by electrophoretic movement. This in turn causes the optical properties of the dynamic glazing to change. Examples of optical properties that can be changed in this way, with a suitable choice of particles, driving, and the like include: transparency, translucency, reflexivity, among others.

In the present invention, the multiple interlaced mesh electrodes cross at a plurality of crossing points. At the crossing point, two main lines of the same mesh electrode are connected through an interconnecting line, e.g., a conductive bridge, e.g., to equalize potential in the mesh-electrodes, even across a large surface of the substrate. The conductive bridge may be insulated from the other mesh electrodes.

Dynamic glazing according to an embodiment improves yield and lifetime due to the possible rerouting in a mesh electrode. For example, a cut line in an electrode may be caused by a defect in production. If current and/or potential is rerouted around the cut, then the defect will not cause a defect, so that yield is improved. For example, a cut line in an electrode may be caused by an electro-chemical degradation during use of the product. Rerouting around such a cut avoids replacing the product so that lifetime is improved.

Interconnections allow the point where the mesh electrodes on the substrate connect to a controller to lie closer together. As a result, a mesh electrode has a more homogeneous potential across the mesh electrode. This allows better control over the potential difference between two opposite points on two opposite mesh electrodes. As result, unwanted field lines are reduced. For example, when opening dynamic glazing (also referred to as vertical drive) mesh electrodes on the same substrate may be driven to the same potential; Using mesh electrodes causes the potential of the mesh electrodes to be closer to each other across the substrate. The transition from a close state to an open state is thereby improved. Increased homogeneity of potential also decreases undesired electro-chemical processes driven by unwanted potential differences between two electrodes.

Using interlaced mesh electrodes makes the light modulator locally more homogeneous in potential. Interlaced mesh electrodes also improve large scale homogeneity; this is improved even more so if the electrode material is highly conductive.

The mesh electrodes cross on the substrate at multiple crossing-points. At such a crossing point there is an opportunity for current to flow from one mesh electrode to another. It is desirable to control such current flows. For example, one may arrange a dielectric between the two mesh electrodes to block such current flow altogether. In an embodiment, current is not always blocked but may be allowed when a predetermined criterion is met. For example, current may be controlled to flow only if the potential difference between the two mesh electrodes is larger than a threshold. For example, a current controlling component may be obtained by semiconductor deposition and/or patterning at the crossing point(s). For example, a diode such as a Zenner diode may be installed in a crossing point between the two mesh electrodes. The Zenner diode may comprise two opposite junctions; alternatively some spacers may comprise a Zenner junction in a different orientation.

When the substrates are used in a light modulator, it is often desired to keep the two substrates at a constant distance from each other. Such a constant distance can be achieved by arranging multiple spacers between the two substrates. Advantageously, a spacer may be installed in a crossing point, e.g., above or below an interconnecting at the crossing point. This reduces the optical impact of the spacers. A spacer may comprise an electrically insulating material. A spacer may comprise semiconducting material. The spacers are preferably transparent.

There may be further spacers that are not arranged on a crossing point. Such spacers may be insulating and help to keep the substrates in a light modulator at a fixed distance. Advantageously, a further spacer, in particular not at a crossing point, may be conductive, and configured to connect a mesh electrode to a connecting point at the opposite substrate. Also such a spacer is preferably transparent.

The spacer material is typically a dielectric to block current from flowing from one substrate to another. However, the spacer be configured to allow current if some pre-determined condition is met, e.g., if a potential difference between a mesh electrode on one substrate and a mesh electrode on another substrate is above a threshold.

A substrate according to an embodiment may be used in a light modulator, also known as an optical modulator. Dynamic glazing is an important application of light modulators. A transparent or reflective substrate for applications such as these, e.g., dynamic glazing, may have two mesh electrodes that each has multiple main lines. The main lines are arranged on the substrate alternatingly, so that an electric field can be established between subsequent or adjacent lines by providing a potential difference to the electrodes.

For example, two such substrates may be arranged opposite to each other, so that charged particles suspended in a fluid between the substrates can be moved by applying voltages to the electrodes. Typically, the electrode designs for the bottom and top substrates are identical, but this is not necessary. Likewise, the two designs are typically aligned with each other, but this is also not necessary. The particles may absorb or reflect light. Reflection may be specular or diffusive, or in between. Particles may emit light, e.g., having phosphorescence or fluorescence.

A light modulator provides a panel of which transparency or reflectivity, etc., can be modified. In an embodiment, color or color intensity, etc., may be changed. A light modulator may be used as cover, e.g., a cover of a container, e.g., a closed, cabinet, and the like. An especially advantageous application is in dynamic glazing. Dynamic glazing is also referred to as smart windows, or as optically active glazing.

In an embodiment, a controller is configured to apply an electric potential to the electrodes on the substrates of a light modulator to obtain an electric field between the electrodes. The electro-magnetic field provides electrophoretic movement of the particles towards or from an electrode. As the particles change position, the optical properties of the panel changes, e.g., its transparency or reflectivity. If the particles are colored then also the color of the panel may change. By changing the pairs of electrodes between which a field is established the particles can be moved into a desired direction. The inventors found that control of a light modulator need not be restricted to solely changing between which electrodes a field is applied or not, but can also comprise changing the maximum amplitude. Note that, advantageously, alternating current is used. For example, by driving with a lower maximum amplitude the rate of change in the light modulator is changed. This is advantageous, for example, when driving towards a desired target transparency or reflectivity, the maximum amplitude may be reduced to avoid overshoot. Maximum amplitude may also or instead be increased when starting driving towards a target transparency or reflectivity. For example, the controller may be configured to obtain one of a multiple levels of transparency or reflectivity in the light modulator by using an alternating current of one of multiple maximum amplitudes. The relationship may be indicated by an algorithm, etc. The relationship between levels of transparency or reflectivity and maximum amplitudes can be governed by a look-up table, e.g., indicating a sequence of maximum amplitudes to drive toward a transparency or reflectivity. Note that alternating voltage is also possible. The controller may be configured to interface between the mesh electrodes and a power source.

The controller may be implemented as a single integrated device, e.g., a microchip, but may also be distributed over multiple sub-controllers. The multiple sub-controllers may, e.g., control different parts of the device. For example, there may be a sub-controller assigned to each substrate. The controllers may be integrated with the substrate, e.g., in a spacer, in the optical layer, on the substrate outside the optical layer, etc., but may also be external to the light modulator. Multiple controllers may communicate wirelessly, or wired. The controller may comprise one or more microchips implementing the controller functionality.

A further aspect of the invention is a building comprising a light modulator according to an embodiment to provide dynamic glazing. The light modulator may for example, modulate the optical properties of a windowpane. A further aspect of the invention is a car comprising a light modulator according to an embodiment. For example, the car and/or building may comprise the light modulator and a controller configured for controlling transparency or reflectivity of the light modulator by controlling voltage on electrodes of the light modulator, the controller being electrically connected or connectable to the light modulator.

A further aspect of the invention is a light modulator which could be applied in other applications than dynamic glazing. The present invention provides a substrate for use in a light modulator.

The present invention also provides a method of manufacturing a substrate for use in an electrophoretic light modulator, e.g., for dynamic glazing, as defined in claim 18. Interestingly, the substrate may first be manufactured in a default form, e.g., a rectangular form, after which the substrate is cut into a desired, e.g., non-rectangular, shape. A mesh electrode keeps its interconnectivity even if it has been cut into a shape. The cutting can also be done after the manufactured substrates, e.g., in their default forms, are assembled into a light modulator, including an optical layer. In that case, sealing may be applied to the edges of the cut light modulator.

Manufacturing a substrate with multiple interlaced mesh electrodes may be done in various ways. Some of which have additional advantages, e.g., having all main lines in the same plane, having all main lines configured for fluidic contact, e.g., exposed on a surface of the substrate, avoiding the use of vias and so on.

Dynamic glazing is an electronic device, which may be driven by a power source, e.g., under control of a controller. For example, the controller may instruct the power source to apply a particular waveform to particular electrodes to achieve various transparency or reflectivity effects or the lack thereof. The controller may comprise a microprocessor.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

### BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1 schematically shows an example of an embodiment of a substrate,
Figure 2a schematically shows an example of an embodiment of a substrate,
Figure 2b schematically shows an example of an embodiment of a substrate,
Figure 2c schematically shows an example of an embodiment of a crossing point,
Figure 3 schematically shows an example of an embodiment of a substrate,
Figure 4 schematically shows an example of an embodiment of a substrate,
Figures 5a-5e schematically show an example of an embodiment of manufacturing a substrate,
Figures 6a-6g schematically show an example of an embodiment of manufacturing a substrate,
Figures 7a-7c schematically show an example of an embodiment of manufacturing a substrate,
Figure 8a schematically shows an example of an embodiment of a crossing point,
Figure 8b schematically shows an example of an embodiment of a crossing point,
Figure 8c-8e schematically show an example of an embodiment of manufacturing a crossing point,
Figure 9a schematically shows an example of an embodiment of an electrode,
Figure 9b schematically shows an example of an embodiment of an electrode,
Figure 9c schematically shows an example of an embodiment of a substrate,
Figures 9d-9h schematically show an example of an embodiment of manufacturing a substrate,
Figures 10a-10b schematically show an example of an embodiment of a substrate,
Figures 10c-10d schematically show an example of an embodiment of cutting out a substrate,
Figure 11a schematically shows an example of an embodiment of a substrate,
Figure 11b schematically shows an example of an embodiment of a substrate,
Figure 11c schematically shows an example of an embodiment of a substrate,
Figure 11d schematically shows an example of an embodiment of a substrate,
Figure 11e schematically shows an example of an embodiment of a substrate,
Figure 11f schematically shows an example of an embodiment of a substrate,
Figure 12a schematically shows an example of an embodiment of a light modulator,
Figure 12b schematically shows an example of an embodiment of a light modulator,
Figure 12c schematically shows an example of an embodiment of a car,
Figures 13a-13c schematically show an embodiment of a light modulator,
Figure 14a schematically shows an example of an embodiment of a method of manufacturing a substrate,
Figure 14b schematically shows an example of an embodiment building a mesh electrode from main lines and interconnecting lines,
Figure 14c schematically shows an example of an embodiment building a light-modulator from substrates,
Figure 14d schematically shows an example of an embodiment of operating dynamic glazing,
Figure 15a schematically shows a computer readable medium having a writable part comprising a computer program according to an embodiment,
Figure 15b schematically shows a representation of a processor system according to an embodiment.

### List of Reference Numerals

The following list of references and abbreviations is provided for facilitating the interpretation of the drawings and shall not be construed as limiting the claims.
- 10: a light modulator
- 11: a first substrate
- 12: a second substrate
- 13, 13a, 13b: electrodes
- 14, 14a, 14b: electrodes
- 15: a fluid
- 16: a controller
- 30: particles
- 20: a car
- 21: a light modulator
- 40: a light modulator
- 41: a first substrate
- 42: a second substrate
- 43: a third substrate
- 46: a controller

- 100: a substrate
- 101: a first direction
- 102: a second direction
- 110: a first mesh electrode
- 120: a second mesh electrode
- 111-113: a main line
- 121-123: a main line
- 151: an interconnect
- 200-205: a substrate
- 210: a first mesh electrode
- 211-215: a main line
- 221-223: an interconnecting line
- 230: a second mesh electrode
- 231-235: a main line
- 231': a main line passing under
- 241-243: an interconnecting line
- 251-253: a crossing point
- 254: a current controlling component
- 261-266: a main line
- 271-273: an interconnecting line
- 281: a first mesh electrode
- 282: a second mesh electrode
- 283: a dielectric
- 284.1, 284.2: a via
- 285.1, 285.2: a via
- 286: an interconnecting line
- 287: a cutting line
- 288: a distance between successive vias
- 291-293: a mesh electrode
- 294: a smaller distance
- 295: a larger distance
- 296: interconnecting lines
- 297: a group of vias
- 301: a first mesh electrode
- 302: a second mesh electrode
- 351: an interconnecting line
- 352: an insulator
- 400: a substrate
- 411: an electrical connection
- 412: a cutting line
- 421: a first edge
- 422: a second edge
- 431: a first mesh electrode
- 432: a second mesh electrode
- 811: a second conducting patterning
- 812: a first conducting patterning
- 821-823: a main line
- 831: an interconnecting line
- 842-844: a main line
- 851: a dielectric
- 852: an interconnecting line
- 853: a spacer
- 901: a mesh electrode
- 902,903: a main line
- 904: an interconnecting line
- 905, 906: a mesh electrode
- 907: a dielectric
- 1210: a first mesh electrode
- 1211: a second mesh electrode
- 1212: a dielectric
- 1213: electrically connecting foil
- 1214: a cutting line

- 1000, 1001: a computer readable medium
- 1010: a writable part
- 1020: a computer program

- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them. Further, the subject matter that is presently disclosed is not limited to the embodiments only, but also includes every other combination of features described herein or recited in mutually different dependent claims.

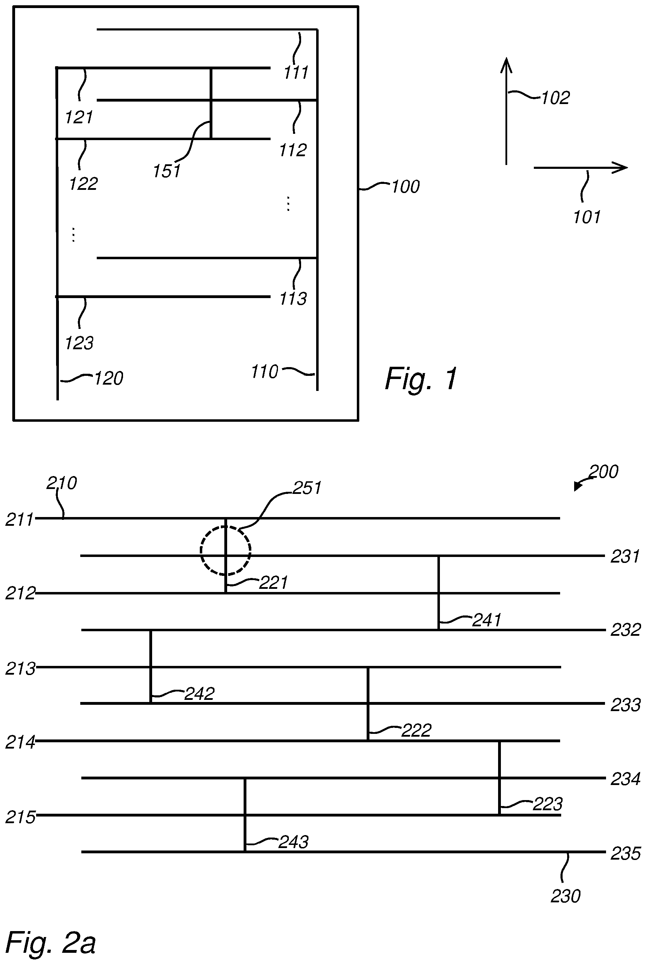

**Figure 1** schematically shows an example of an embodiment of a substrate 100. There are at least two mesh electrodes arranged in a pattern across a surface of substrate 100. Shown in figure 1 are two electrodes on the same surface: a first electrode 110 and a second electrode 120.

Electrodes 110 and 120 shown in figure 1 are mesh electrodes. The fingers of a mesh electrode are interconnected through multiple interconnects. One such interconnect is shown: interconnect 151.

First mesh electrode 110 and second mesh electrode 120 each comprise multiple main lines. As shown in figure 1, first mesh electrode 110 comprises main lines 111, 112, and 113, and second mesh electrode 120 comprises main lines 121, 122 and 123. Typically, each mesh electrode will comprise more lines than three. The main lines extend across the substrate. The mesh electrodes are electrically isolated or isolatable from each other. The multiple main lines of the first and second electrode are arranged alternatingly with respect to each other on the substrate. The main lines extend across the substrate in a first direction 101. When viewed in a second direction 102, the main lines are encountered alternately from different multiples, e.g., from the first and second multiple of main lines in the first and second mesh electrode, respectively. The first and second direction make an angle with each other; the angle may be substantially perpendicular, but this is not necessary. The first and second direction may each be parallel to a side of the substrate, but this is not necessary.

The interleaved mesh electrodes ash shown in figure 1 are combs that are interleaved into one another in pairs. Each mesh electrode in this figure has a connecting line running, in this case, along the left and right of the substrate, that does not cross main lines. I should be noted that, having interconnections, such connecting lines are not necessary, and in fact is preferably avoided.

The two mesh electrodes are interlaced; for example each on the mesh electrodes comprises multiple main lines that are arranged alternatingly on the substrate. Such an alternating arrangement is also referred to as interdigitated. The mesh electrodes have an increased internal connection through the interconnects. For example, there are multiple electrical paths from most or even substantially all parts of the main lines to an electrical connector.

There could be more than two electrodes on the same side of the substrate, e.g., to facilitate more fine-grained control. For example, when three or more mesh electrodes are used on a single substrate, different voltages may be placed on the mesh electrodes causing effects on the particles that cannot be achieved with two mesh electrodes. For example, multiple electrodes may be used to facilitate a segmented substrate, e.g., for a segmented light modulator. For example, in a segmented light modulator some zones may have different optical properties, e.g., a different transparency or reflectivity. Below an embodiment with two electrodes is shown, but additional electrodes could be added to them, e.g., by replicating similar structures next to each other.

At least part of first mesh electrode 110 and second mesh electrode 120 are applied to a same side of the substrate. For example, the main lines may be in fluidic contact with a fluid in an optical layer. In that case, interconnects such as interconnect 151 may be applied in a different layer or plane as the main lines. This is not necessary though, in a different arrangement part of the main lines may not be in fluidic contact, e.g., to electrically isolate mesh electrodes 120 and 110 in a different manner.

The two electrodes are arranged in a pattern across the substrate. There could also be one, two or more electrodes on the other surface of substrate 100, e.g., to facilitate stacking of three or more substrates. Applying electrodes to a substrate may be done by photolithography, e.g., using a mask representing the electrodes pattern. Electrodes may also be applied by embedding them in the substrate.

Two or more substrates, such as substrate 100, may be combined into a light modulator. A motivating application for a light modulator is in dynamic glazing, also known as smart glazing, e.g., a light modulator, which may be applied in domestic housing, offices, green houses, cars, and the like. Optical properties such as a level of transparency or reflectivity of the dynamic glazing can be adapted electrically. For example, in dynamic glazing two substrates such as substrate 100 may be stacked so that the sides on which the two electrodes are applied face each other. A fluid with particles is enclosed between the two substrates, which is known as an optical layer. The particles are charged or chargeable. The optical properties that change may depend on various factors, including the type of particles. For example, if the particles absorb light, then a change in transparency may be obtained. For example, if the particles reflect, then a change in reflection may be obtained.

By generating an electric field between different mesh electrodes, e.g., between mesh electrodes on the same substrate, or between mesh electrodes on an opposite substrate, the particles can be moved towards or from one of the multiple mesh electrodes by electrophoretic movement, causing modulation of the optical properties of the light modulator.

For example, one may switch to the non-transparent state or to the non-reflective state by creating an alternating voltage on at least one of the first and second substrates, applying an alternating current between at least a first mesh electrode and a second mesh electrode on the first substrate and/or between a first mesh electrode and a second mesh electrode on the second substrate.

For example, one may switch to the transparent state or to the reflective state by creating an alternating voltage between the first and second substrate, applying an alternating current between a first mesh electrode on the first substrate and a first mesh electrode on the second substrate, and/or between a second mesh electrode on the first substrate and a second mesh electrode on the second substrate.

Where the mesh electrodes cross each other, there is a crossing point. Figure 1 shows one interconnect 151, which has a crossing point with main line 112. Typically, there are many crossing points. They may be distributed across the substrate in a regular pattern. They may be distributed across the substrate in a random pattern.

In an embodiment, the multiple interconnections run in a second direction. In the shown example, the interconnect 151 runs in a second direction 102 which is orthogonal to first direction 101 in which direction the main lines run. An orthogonal angle, or substantially so, is convenient but not necessary. The angles between the interconnects and main lines have an influence on diffraction of the light modulator. For example, in an embodiment, the angles are varied, e.g., in a pattern or randomly, across the substrate to reduce diffraction.

A controller may be electrically connected to the multiple electrodes. The controller may control the electric fields between the electrodes. For example, a controller may comprise a processor and a connected memory. The memory comprising processor instructions for execution by the processor. The processor instructions cause the processor to control the electric fields. In an embodiment, the controller comprises a sub-controller for each substrate.

In figure 1, the main lines are connected to a connecting-line connecting the main lines of the mesh electrode to each other without crossing another mesh electrode on the substrate-in figure 1, a connecting-line runs on the left for electrode 120 and on the right for electrode 110. Interestingly, mesh electrodes do not need such connecting-lines. If the connecting lines are removed from figure 1, then a voltage or current may be applied to both mesh electrodes from any point along the left and right edge of substrate 1. This is advantageous for instance when installing substrate 100, e.g., in a light modulator, in particular dynamic glazing. Dynamic glazing embodiments are further discussed elsewhere in this document.

In an embodiment, electrodes, e.g., two or more electrodes are applied to one surface of each substrate. There could also be one, two or more electrodes on the other surface of substrate 100, e.g., to facilitate stacking of three or more substrates.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used can be used in an embodiment can be varied, e.g., to particles that differ in which wavelengths they absorb or reflect, and how specular of diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets the electric field at any part of the substrate can be controlled as two opposite electrodes border the part from two opposing sides. Instead of straight lines such as shown in figure 1, the lines may be varied in a number of ways. For example, one may vary the shape of a line, e.g., a main line or an interconnecting line, e.g., making them wavy rather than straight. For example, one may add short branches that extend from a main or interconnecting line. Such embellishments change the diffraction of a display, and in particular may lower it. Although these embellishments are not shown in the figures, they may be added if desired.

**Figure 2a** schematically shows an example of an embodiment of a substrate 200. Substrate 200 may be used in dynamic glazing. Multiple mesh electrodes are applied to substrate 200: shown in figure 2a are two mesh electrodes: mesh electrode 210 and mesh electrode 230. The two mesh electrodes can be used to create an electric field between the mesh electrodes. When an optical fluid is used, then such an electric field may be used to provide electrophoretic movement of particles towards or from an electrode. Two mesh electrodes are sufficient to create a light modulator, e.g., dynamic glazing, however when more than two mesh electrodes are present a better control of the electric is possible.

In this embodiment, each of the multiple mesh electrodes comprises multiple main lines extending in a first direction. For example, mesh electrode 210 comprises multiple main lines: shown are main lines 211, 212, 213, 214 and 215. For example, mesh electrode 230 comprises multiple main lines: shown are main lines 231, 232, 233, 234 and 235.

The creation of long and thin electrode lines, such as these main lines, can be subject to production defects. If a main line is connected to the controller through only a single path, then a cut in that main-line would electrically isolate the main line after the cut. In dynamic glazing this would be seen as a loss of controllable area, e.g., a line fault. For example, a line fault may be seen in a grey scale panel as a black line. Adding interconnects, e.g., interconnecting lines alleviates this problem.

In the embodiment shown, the main lines of the multiple mesh electrodes, e.g., mesh electrodes 210 and 230, extend in a same direction, e.g., in first direction 101, e.g., they are parallel. The main lines can be used to control the optical properties of a light modulator. Note that the main lines of the multiple mesh electrodes are arranged on the substrate in an alternating pattern, that is interspersed. Such a pattern is also referred to as interdigitated. For example, the main lines of mesh electrodes 210 and 230 are arranged in turn; the two multiples taking turns on the substrate.

The main lines of the mesh electrodes are connected to each other through multiple interconnecting lines. The multiple interconnecting lines electrically connect the main lines of a mesh electrode together. In particular, multiple main lines of the mesh electrode are connected to other main lines of the mesh electrode through multiple interconnecting lines.

For example, the main lines of mesh electrode 210 are connected to other main lines of the same mesh electrode through multiple interconnecting lines: shown are interconnecting lines 221, 222 and 223. For example, main lines 211 and 212 are connected through interconnecting line 221; main lines 213 and 214 are connected through interconnecting line 222, and so on. Likewise, the main lines of mesh electrode 230 are interconnected through interconnecting lines: shown are interconnecting lines 241, 242, and 243. In practice there may be many more main lines than the five main lines shown for these two mesh electrodes; there may be many more interconnecting lines than the three shown for each mesh electrodes.

An interconnecting line crosses with another mesh electrode forming a crossing point. For example, the interconnecting line 221 connects two main lines of mesh electrode 210, but crosses main lines 231 of mesh electrode 230. Six crossing points are shown in figure 2a, one for each interconnecting line. One crossing point has been marked with a dashed circle and reference numeral 251. There may be many more crossing points in practice.

The interconnecting lines are connected to mesh electrodes that will have the same potential when the substrate is used in a light modulator. In an embodiment, the lines of different potential are isolated from each other by an intermediate dielectric at the crossing point, or crossing section.

In addition to increasing the useful life of a substrate by protecting the electrodes from undesired cuts, e.g., cuts occurring due to small defects during manufacturing or cuts due to ageing of the device, the interconnects have an additional surprising benefit. The long thin lines impose a limitation on the scale of the light modulator, since their resistance increases with their length. Accordingly, the electric field is not homogeneous. By adding interconnecting lines the homogeneity of the electric field is improved resulting in more homogeneous transparency or reflective levels, especially if the mesh electrodes on a substrate are powered from the same edge, or even from the same point on the edge of the substrate.

The plurality of crossing points may be distributed in various ways across the substrate. For example, they may be distributed randomly across the substrate. For example, they may be distributed in a regular pattern. For example, the distribution may be obtained as a result of an optimization process, e.g., an optimization for diffraction, homogeneity, and possibly other desirable properties.

Connecting a main line with one or more other main lines of the same mesh electrode is advantageous, e.g., it protects that particular main line from cuts. It is advantageous that all main lines are provided with interconnecting lines, but this is not necessary. For example, in an embodiment, the number of the main lines in the mesh electrode(s) that comprise at least two interconnecting lines, is at least two, at least 10, at least half of the number of main lines, at least 90% of the main lines, or substantially all main lines. For example, in an embodiment, a main line is connected to at least 2, at least 4, at least 8, or at least 16 interconnection lines. For example, a main line is connected to an interconnecting line within distance of the edge of the substrate, the distance being less than 10% of the length of the main line, less than 10 cm, or less than 5 cm, etc.

In an embodiment, a considerable part of the mesh electrodes on the substrate is exposed on the surface of the substrate, so that the mesh electrode when the substrate is employed in a light-modulator is in fluidic contact with the optical layer. It is not needed that all of a mesh electrode is exposed in this manner. For example, at a crossing point a first one of the two crossing mesh electrodes may run under the second one of the two crossing mesh electrode so that part of the first mesh electrode may not be exposed, and may not be in fluid contact. This un-exposed part does not significantly affect the optical properties of the light-modulator though. For example, one may arrange that a large part of a mesh electrode is in fluidic contact, say at least 80%, 90%, etc. For example, in an embodiment all the main lines may be in fluidic contact.

The substrate shown in figure 2a may be manufactured, for example, by performing the following operations
- Patterning a first mesh electrode on the substrate. The mesh electrode may comprise multiple main lines and multiple interconnecting lines. In an embodiment, the main lines may be distributed regularly across the substrate, while the multiple interconnecting lines may be distributed randomly,
- Patterning on top of the interconnecting lines electrically insulating areas (also referred to as islands or patches), in particular at places on interconnecting lines where the second mesh electrode will cross, and on top of the main lines of the first mesh electrode where later interconnecting lines of the second mesh electrode will cross.
- Patterning the second mesh electrode on the substrate. The second mesh electrode may also comprise multiple main lines and multiple interconnecting lines. The multiple main lines of the second mesh electrode may interdigitate with the main lines of the first multiple of main lines. The main lines of the second mesh electrode cross the interconnecting lines of the first mesh electrode at the locations where isolating islands where patterned. The interconnecting lines of the second mesh electrode cross the main lines of the first mesh electrode at the locations where isolating islands were patterned on the main lines of the first mesh electrode.

Using a regular pattern for the main lines, e.g., an equal distance between the main lines of the first and second mesh electrodes causes a homogeneous electric field. A random distribution of the interconnection lines reduces the contribution to diffraction. The above manufacturing can be extended to more than two mesh electrodes.

In the above manufacturing the electrodes lines may not be at the same level. It is also possible to place the main lines at the same level above a whole surface of dielectric. For example, one may pattern the main lines of all mesh electrodes, and place the interconnects underneath a dielectric, e.g., that covers the whole surface. Electrical connection between the interconnects and the electrode lines may be done using a via, e.g., a hole in the dielectric at the specific location of the intersection and covers with metal. Typically, the substrate is itself dielectric.

Regardless how the interconnecting lines are placed, they prevent loss of electrical connection, e.g., because of line interruption such as during production or due to electro-corrosion of the line. This construction will increase the production yield and also the lifetime of the product.

Interestingly, interconnections improve reduce resistance at larger distances from the connector of the substrate. In conventional interdigitated lines, the very long thin electrode will have a significant resistance, especially for very large displays. By having the interconnection between the interdigit lines, the electrode is turned into a mesh electrode from an electrical point of view. This causes lowering of the resistance of the electrical tracks and a better distribution of the electric field resulting in a larger homogeneity of the operation of the device.

The interconnections allow the mesh electrodes to be powered from points that are close together, e.g., from the same edge, from the same connector, from the same point, which has several advantages. Without interconnecting lines, e.g., when powered from opposite edges of the substrate, there would be a locally different potential between main lines even if the input voltage is the same. At a fixed area in the device, this difference is created by the distance from the connector that creates a specific electrode line resistance. This distance, and thus resistance, is different between the two interdigit electrodes and varies across the substrate as the considered area is closer to one connector or to the other. As shown in Figure 2a, the end of electrode line 215 has a significantly higher length compared with the point of electrode line 235 or 234 which is close to the end of electrode line 215. Such a difference in potential will create DC shift and therefore maintain a fixed low rate of electro corrosion. For example, it is often desired that neighboring main lines on a substrate have the same potential; for example, this may be used when the display is opened (also referred to as driven vertically). However, without interconnecting lines, e.g., without a mesh electrode, a small horizontal electric field will still be generated due to the fact that two points that are opposite to each other have a different distance to the connector, e.g., as measured along their main lines. This small undesired potential difference on a substrate will disturb the electric field direction and the performance of the display. Using interconnecting lines can therefore be used to ensure that points opposite to each other on neighboring main lines have a closer potential when the corresponding mesh electrodes have a same input voltage.

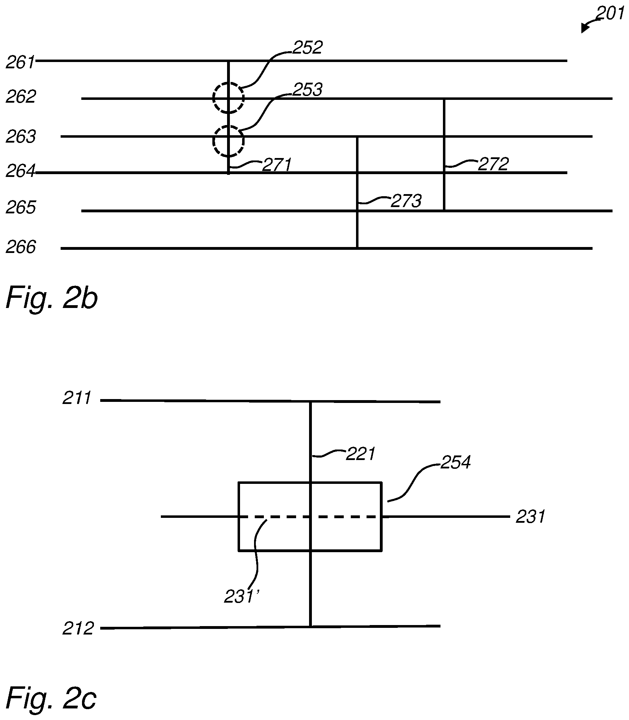

**Figure 2b** schematically shows an example of an embodiment of a substrate 201. If finer control of particle movement in a light-modulator such as a light-modulator used in dynamic glazing is desired, more electrodes may be added on the substrate. For example, in a light modulator there are at least two electrodes on each substrate, but there may be more than two electrodes. For example, at least three electrodes may be applied to at least one of the first substrate and the second substrate. For example, in an embodiment two electrodes may be applied to a first substrate and three electrodes to a second substrate. See for example, US patent application 16/994918, published as US2021342235A1, for many examples of configurations with a different number of electrodes, which electrodes may be implemented as mesh electrodes.

A system in which one substrate has at least two electrodes and the other has at least three electrodes has various advantages. For example, such a light modulator may be driven so that the so-called curtain effect is reduced. The curtain effect happens during closing of the window, in which it appears that a curtain is drawn between the electrodes. The curtain effect is a disadvantage, it is visibly distracting in itself, but it also increases diffraction. On a side with 3-electrodes the electrodes can be closer together than on 2-electordes, e.g., below 50 micrometer, more preferably below 40 micrometer, e.g., 35 micrometer. This means that the electric field is stronger. Accordingly, closing is faster and the curtain effect is reduced. With a 2+2 panel moving the electrodes closer together would lead to a reduced maximum transparency or reflectivity. But when an additional electrode is available this is avoided. When open, some of the additional electrodes may be unused, so that there is little loss of maximum transparency or reflectivity. Additional electrodes on a substrate, e.g., electrodes over two, may be configured not to attract particles when opening panel, but to attract particles when closing the panel. For example, a panel in which each substrate has at least 2 electrodes may have together at least 4 electrodes. The substrates in a panel may have at least 5 electrodes, e.g., in 2+3 design; or, at least 6 electrodes, e.g., in 2+4, or 3+3 design; or at least 8 electrodes, e.g., in a 4+4 design, or as two 2+2 design stacked together using 3 substrates, the middle of which has two electrodes on each side.

Substrates that have more than two electrodes may also benefit from using mesh electrodes. For example, at least three mesh electrodes may be applied to a substrate. The same techniques as for two electrodes may be extended to three electrodes. For example, figure 2b shows a substrate 201 having three mesh electrodes: a first mesh electrode for which main lines 261 and 264 and interconnecting line 271 are shown; a second mesh electrode for which main lines 262 and 265 and interconnecting line 272 are shown; a third mesh electrode for which main lines 263 and 266 and interconnecting line 273 are shown. An interconnecting line of a mesh electrode crosses one or more main lines of the other mesh electrodes on the substrate. For example, in this case, interconnecting line 271 has two crossing points: crossing points 252 and 253. The crossing points can be made as in embodiments with two mesh electrodes. For example, a dielectric may be arranged between the interconnecting line, e.g., interconnecting line 271 and the main line of the other mesh electrode. Depending on the manufacturing method, an interconnect line may be in a different plane than the mesh electrodes; the mesh electrodes may be in the same plane or in a different plane

The substrate 201 has three mesh electrodes applied, more mesh electrodes may be used, e.g., four or more, etc. When the substrate is used in a light modulator the opposing substrate may also have at least three mesh electrodes, or four or more and so on. The opposing substrates may have a different number of electrodes.

**Figure 2c** schematically shows an example of an embodiment of a crossing point. Figure 2c shows two main lines 211 and 212 belonging to the same first mesh electrode. For example, the two main lines may be main lines of mesh electrode 210. Figure 2c shows an interconnecting line 221 between main lines 211 and 212. The interconnecting line 221 crosses a main line 231 of a different second mesh electrode creating a crossing point. Since different mesh electrodes sometimes need to have a different potential and sometimes a same potential, it is important that the potential of the first and second mesh electrodes can be controlled independent of each other.

This can be achieved by arranging current controlling component 254 between the interconnecting line 221 and the main line 231. A part of interconnecting line 221 runs under current controlling component 254 while interconnecting line 221 runs over it. The part of main line 231 that runs under current controlling component 254 is indicated with a dashed line and reference numeral 231'. It could also be the other way around, e.g., with interconnecting line 221 running in part under current controlling component 254 while main line 231 runs over it. The latter has the advantage that the full main-line can be in fluid contact in a light modulator.

Typically, the current controlling component 254 will be made from a transparent material. Component 254 may comprise semiconducting material or only insulating material. For example, component 254 may comprise inorganic materials, e.g., silica, or organic materials, e.g., polyamide, photoresist, acrylic resist, and the like.

The current controlling component controls the current that can flow between main line 231 and interconnecting line 221-that is between the two mesh electrodes. An often used choice for the current controlling component is to use a dielectric; in this case the current is controlled by blocking it.

Another choice for the current controlling component is to configure it to pass current if the potential between interconnecting line 221 and main line 231 satisfy a criterium. For example, if the voltage difference between interconnecting line 221 and main line 231 is high, then current may be allowed to travel through the current controlling component 254, e.g., if the voltage difference is higher than a threshold. For example, if the voltage difference between interconnecting line 221 and main line 231 is low, then current may be blocked and not allowed to travel through the current controlling component 254, e.g., if the voltage difference is lower than a threshold. Note that interconnecting line 221 is part of the same mesh electrode as main line 211. So that current is allowed to travel between the first and second mesh electrodes if their potential difference is high, e.g., is high at the crossing point, e.g., is higher than the current controlling component's threshold. There are various semiconducting components that control current, for example, the current controlling component may be a Zenner diode.

In an embodiment, the Zenner diodes comprises two back to back Zenner junctions in series with opposite polarity. If the voltage difference is larger than threshold *T* or smaller than threshold -*T* than current can flow, otherwise it does not. Such a Zenner diode avoids a large voltage difference that might otherwise damage the system, e.g., a so-called overvoltage. A Zenner diode is also beneficial if the connecting points of the mesh electrodes are far apart.

For example, an interdigitated pattern in which interconnecting lines comprise a current controlling component such as a Zenner diode has several advantages. For example, when opening the display (also known as vertical drive). The driving may be done at a high voltage. The diode will let current pass for both high positive and negative voltages. At the higher voltage, the mesh density is increased since the current controlling components connect the two mesh electrodes. In the opening phase, it is preferred to have the mesh electrodes of the same substrate at the same potential. This is also beneficial for the lifetime of the product.

In an example, the open drive is 24V AC on both mesh 1 and mesh 2 of a substrate. A Zenner diode is configured to pass current when the potential difference is higher than 23V. So if a part of mesh 1 were to break and become insulated, mesh1 would be at 0V, but mesh2 would be at 24V. At that point, the Zenner diode would pass electricity and so that the potential of mesh 1 equals the one of mesh 2, in this case 24V. When closing mesh 1 may be at a potential of 10V, as an example, and mesh2 could then be at a potential of -10V. The potential difference for the Zenner diode is then 20V, which is below 23V, so the Zenner diode blocks current, which means a horizontal electric field is created.

When closing the device (also known as horizontal drive) it is an advantage to insulate each of the mesh electrodes. As a result, the horizontal drive will occur only at low voltages to prevent conduction via the Zenner diodes.

It may happen, that a portion of an electrode mesh 1 becomes insulated. This may happen for example if there are two cuts between two interconnects. In that case, you have a floating line. Using a Zenner diode approach for the dielectric interconnect of the second mesh will help to discharge this insulated portion. The driving at high voltage would have charged the portion of electrode of mesh 1. When closing the device, the Zenner diode from the interconnect of the mesh 2 will discharge the insulated branch until the potential is below what activate the Zenner diode. Therefore, this portion of electrode mesh 1 will not remain transparent as the device is driven to opaque state.

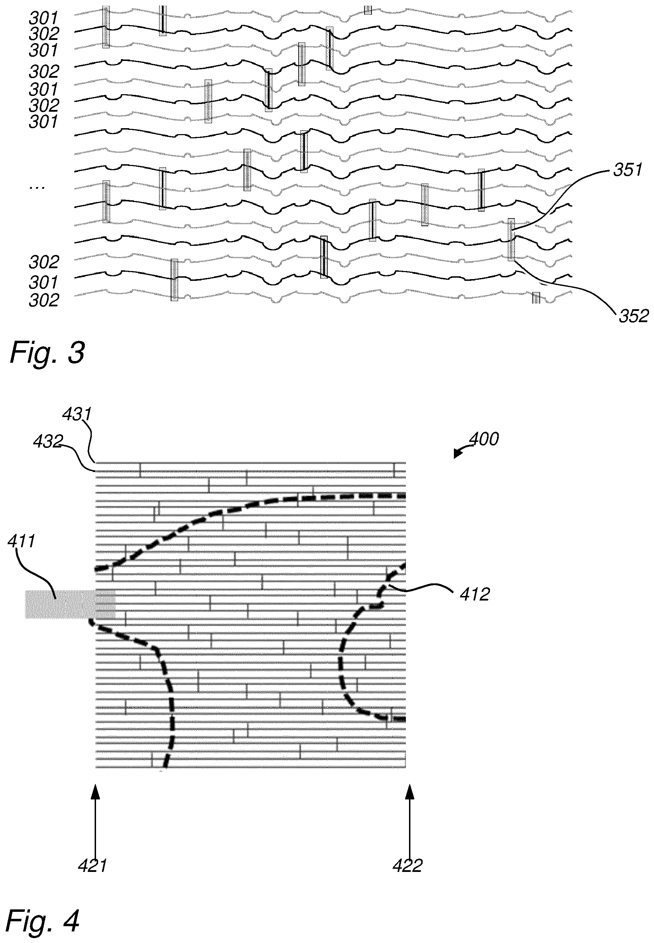

**Figure 3** schematically shows an example of an embodiment of a substrate. Shown in figure 3 are a part of two mesh electrodes 301 and 302. The main lines of the two mesh electrodes are indicated on the left with the refence numeral of the two mesh electrodes 301 and 302, respectively. Shown in figure 3 are interconnecting lines 351 and insulators 352. The insulators isolate the two mesh electrodes 301 and 302 from each other. Note that some of the interconnecting lines shown in figure 3 connect two main lines of mesh electrodes 301, and some of the interconnecting lines connect two main lines of mesh electrodes 302.

In the embodiment of figure 3, the main lines are not straight but wavy, while the interconnecting lines are straight. Also or instead the interconnecting lines could be wavy. Using non-straight lines has a lower impact on diffraction, moreover as there are many possible non-straight lines, this has the advantage that they can be optimized for their impact on diffraction. How much an electrode line contributes to diffraction depends on its shape, by changing the shape this contribution can be changed. For example, the wavy line may be built up by connecting shapes such as line segments, half circles, sinusoidal shapes, and the like. Shown in figure 3 are two mesh electrodes but more non-straight mesh electrodes may be combined.

**Figure 4** schematically shows an example of an embodiment of a substrate 400. Shown in figure 4 are multiple mesh electrodes, in this example, two mesh electrodes 431 and 432. Each of the mesh electrodes comprises multiple main lines and multiple interconnecting lines. The substrate has four edges. Two opposite edges have a reference numeral: edge 421 and edge 422. The edges 421 and 422 are arranged so that they are incident with main lines of all mesh electrodes. For example, main lines of mesh electrode 4341 and of mesh electrode 432 arrive at edge 421 and edge 422.

A connector 411 is arranged on edge 421 that connects electrically with one or more main lines of all mesh electrodes, e.g., of mesh electrodes 431 and of 432. A controller can conveniently control all mesh electrodes by connecting the controller to the connector 411. For example, connector 411 may have an interface for connecting a wire to connector 411. The other end of the wire may be connected to the controller. Because of the interconnections, connector 411 may be arranged on one edge of the substrate, even at one point of one edge of the substrate.

Preferably, the connecting points on the substrate (whether or not after cutting) where the mesh electrodes connect to a cable or the like connected to a power source, e.g., the controller, are close together. For example, the connecting points may be on same edge of the substrate. The connecting points do not necessarily have to be on an edge. A connecting point can also be on the substrate, e.g., on the backside of a substrate opposite the mesh electrodes. Still, it is preferred that connecting points are close together. For example, the connecting points may be in a single connector. For example, the connecting points may lie within 10 cm or less, or 5 cm or less, from each other.

Using mesh electrodes has a further important advantage, which is that the substrate may be cut in various shapes. For example, substrate 400 may be manufactured in the form of a rectangle. But after the rectangular shape has been produced it can be cut in a different shape. Figure 4 shows a cutting line 412 in the form of a thick dashed line, along which substrate 400 may be cut. An unending variety of shapes may be cut from substrate 400 without changing the manufacturing of the substrate itself. Even after cutting the substrate, the connector 411 connects to all the mesh electrodes. In conventional designs without interconnecting lines it is not possible to cut the design, since the main lines are sensitive to line interruption.

The substrate may be cut before two substrates are combined into a light-modulator but also after they are combined. For example, an assembly comprising at least two substrates an optical layer with a fluid and particles between two substrates can form a light modulator. The assembly may be cut after assembly, thus obtaining a light modulator in a particular shape.

By first manufacturing a rectangular substrate and then cutting it, a substrate can be provided that is not a rectangle. Connecting points can be assigned on the substrate(s). For example, an electric connector can be provided to the mesh electrodes on a substrate at a single point.

A connector such as connector 411 may be mounted on the light modulator before or after the cutting. For example, a connector may be mounted on an edge of a substrate, the connector may be connected to all multiple mesh electrodes on a substrate, or even to all mesh electrodes on both substrates. On the other and, the connector may be connectable to a controller.

It is possible to obtain a free cutting of the device without electrical disruption. The cutting may even include holes. When cutting the cut edges of the substrate may be closed, e.g., by melting, e.g., by gluing. Closing keeps the fluid between the substrates.

Cutting the device after module production may remove the sealing of the device. Welding processes can be used in order to recreate the module insulation/sealing after the cutting. Melting is particular efficient for plastic substrates. The melting may, e.g., be done using a laser, which may also be used for the cutting itself. A glass substrate may also be cut and closed. It is also possible to cut without leaving an edge accessible, if the cutting is done before assembly at substrate level

An edge strip of contact foil can be placed at the edge of a module. If the cutting ensures leaving a small edge corresponding to the distance between 2 interdigit electrode lines, then the device will be functioning.

Yet another advantage of using the interconnecting lines is that the light modulator is much less sensitive to damage. For example, if part of the light modulator is cut by accident, e.g., because of a collision with an object, the light modulator will remain functional. If fluid were to leak from the collision, this can be stopped by gluing, melting, or otherwise closing the cut part of the light-modulator.

In an embodiment, the controller is electrically connected to the multiple mesh electrodes on a substrate at a connecting area on the substrate. Connecting through such a connecting area equalizes distances to a power source, and thus minimize the difference in potential between two points opposite each other on two successive main lines of two mesh electrodes. For example, a connection area may be formed by a connector that is connected to one or more substrates. For example, the connecting points on the substrate in a connecting area may be close to each other, e.g., at most 10cm, at most 5 cm, at most 1 cm, or even closer together. Connecting to the mesh electrodes close together makes the resistance to a place on the substrate, e.g., to two opposite points on opposite main lines, close together. In an embodiment, the resistance from points on opposite main lines to a power source is within 10%, 5%, 1% and below. (e.g., measured as the larger resistance minus the smaller resistance as a percentage of the smaller resistance).

A connecting area may be at an edge of the substrate or at a backside of a substrate, etc.

There are several ways in which a substrate according to an embodiment may be manufactured. For example, a method of manufacturing a substrate for use in a light modulator, e.g., for dynamic glazing may comprise
- providing a substrate. For example, a dielectric substrate. For example, a plastic or glass substrate, etc.; and
- applying multiple interlaced mesh electrodes on the substrate, the multiple interlaced mesh electrodes extending in a two-dimensional pattern across the substrate, two mesh electrodes of the multiple mesh electrodes on a substrate crossing at a plurality of crossing points spread across the substrate.

For example, applying a mesh electrode may comprise applying multiple main lines and applying multiple interconnecting lines. Applying electrodes, e.g., main lines and/or interconnecting lines, may be done by patterning, e.g., using photolithography with etching process, LASER pattering, after a conductive material deposition, e.g., using thin film techniques like spin coating, flexoprinting, slit coating and so on. For example, electrodes may be applied by coating with a layer of a conductive material, e.g., a metal, and partially removing the coating so that the electrodes remain. Applying may be done using direct printing. It is also possible to create a mesh electrode by direct patterning of a conductive photoresist via a conventional photolithography process, or direct LASER writing, etc.

The method of manufacturing may also comprise aligning a current controlling component at crossing points between the two mesh electrodes, e.g., at a crossing between a main line and an interconnecting lines. For example, by patterning isolating patches or islands on main lines and/or on interconnecting lines. The interconnecting conductive lines can be obtained by following a similar production techniques as used for electrode mesh patterning.

There are many ways in which such a method of manufacturing can be varied of changed. Example of which are given herein.

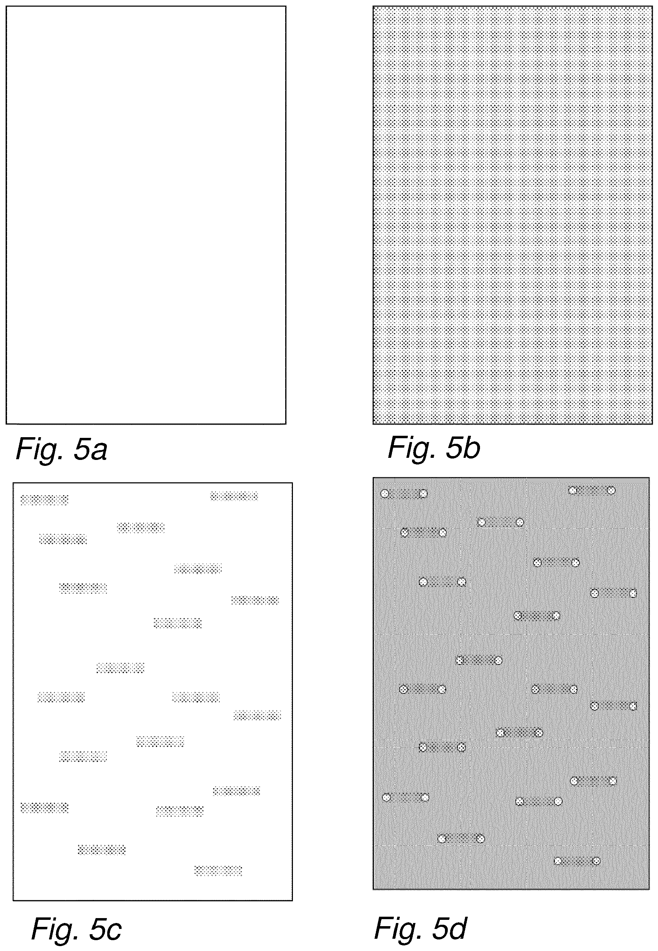

**Figures 5a-5e** schematically show an example of an embodiment of manufacturing a substrate

**Figure 5a** shows the providing of a substrate. For example, the substrate may be a plastic or glass substrate. In figures 5b and 5c multiple interconnecting lines are patterned on the substrate. **Figure 5b** shows the deposition of a conductive layer for patterning on the substrate and **figure 5c** shows the result after patterning. In this example, the interconnecting lines are applied to the substrate before the main lines. In this example, the interconnecting lines are isolated from each other after the patterning step. In this example, the interconnecting lines are patterned by a photolithography and/or etching process. The interconnecting lines may be applied by printing them directly in the expected pattern, e.g., via techniques such as inkjet printing, screen printing, etc. To improve the resolution of the printed process, extra local photolithography or dry etching can be performed after the printing to thin the lines.

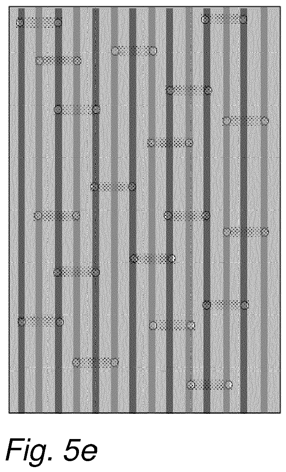

**In** **figure 5d** the substrate is coated with a dielectric layer. Holes are created in the dielectric to create vias. In this example, the interconnects are created underneath the interdigitated pattern and are separated by the dielectric layer from the mesh electrodes. **Figure 5e** shows the applying of multiple main lines of multiple mesh electrodes, in this cased of two mesh electrodes. The multiple main lines of the multiple electrodes are arranged alternatingly with respect to each other on the substrate. Note that the main lines are connected to the interconnecting lines applied in figure 5c through the vias. The vias connect the applied main lines into multiple mesh electrodes. In a process such as this, all the main lines are in a same plane parallel to the substrate, while the interconnecting lines are in a different plane.

Advantageously, when the substrate is used in a light modulator all the main lines will be in fluidic contact with the optical layer, while none of the interconnects are. A drawback of the processes illustrated with figures 5a-5e is that a layer of dielectric remains everywhere across the surface. Such a pervasive layer of dielectric may alter the optical performances of the devices. The disadvantage of a layer of dielectric remaining can be resolved by an extra patterning of that layer, though this increases complexity.

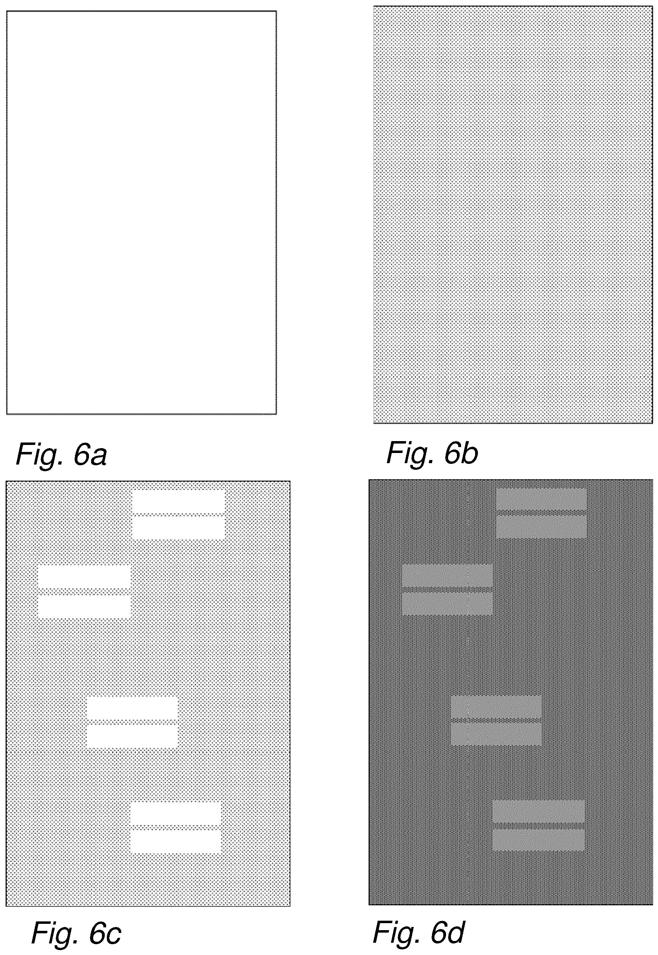

This may be avoided using alternative manufacturing process, which may still use a photolithography process but which does not leave the dielectric layer everywhere, and which does not need vias to connect. **Figures 6a-6g** schematically show an example of an embodiment of manufacturing a substrate.

**Figure 6a** shows the providing of a substrate. **Figure 6b** shows coating the substrate with a first conductive layer. **Figure 6c** shows the result after patterning the first conductive layer to form interconnections. In this example, the interconnecting lines are applied to the substrate before the main lines. Different from figure 5c the interconnecting lines are not isolated from each other after this patterning process. The interconnecting lines are patterned by removing conductive material above and below them. However, at the ends of the interconnecting lines the conductive material of figure 6b is not removed. The latter material will later be used to connect to the mesh electrode instead of using a via. In this example, the interconnecting lines are patterned by a photolithography and/or etching process.

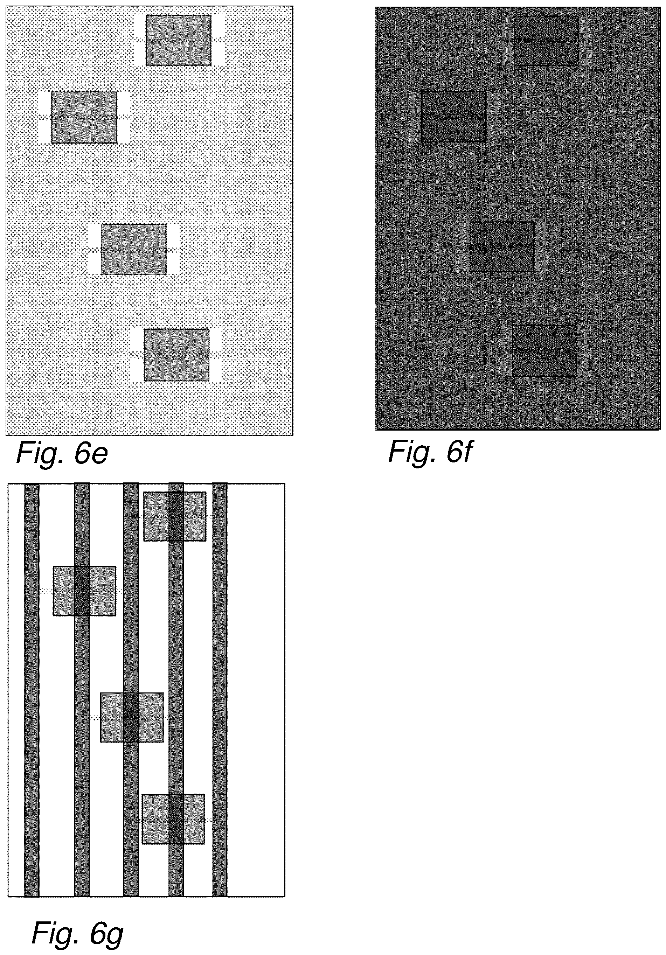

**Figure 6d** shows the coating, e.g., deposition, with a dielectric layer. The dielectric layer is patterned to obtain isolating patches over the interconnecting lines shown in figure 6c. The result is shown in **figure 6e****.** Alternatively, the dielectric layer may be deposited locally. The dielectric remains only to cover the interconnect's area.

**Figure 6f** shows the deposition of a second metal layer that covers the whole substrate. The substrate is patterned in **figure 6g** to reveal the interdigitated main lines. Note that the latter patterning removes part of the coating shown in figure 6f and of the coating shown in figure 6b. Figure 6g shows the result of the patterning. The main lines for the most part comprise two layers of metal: one layer deposited in figure 6b the other deposited in figure 6f. Only where a main line goes over an isolating patch will it use only a single layer.

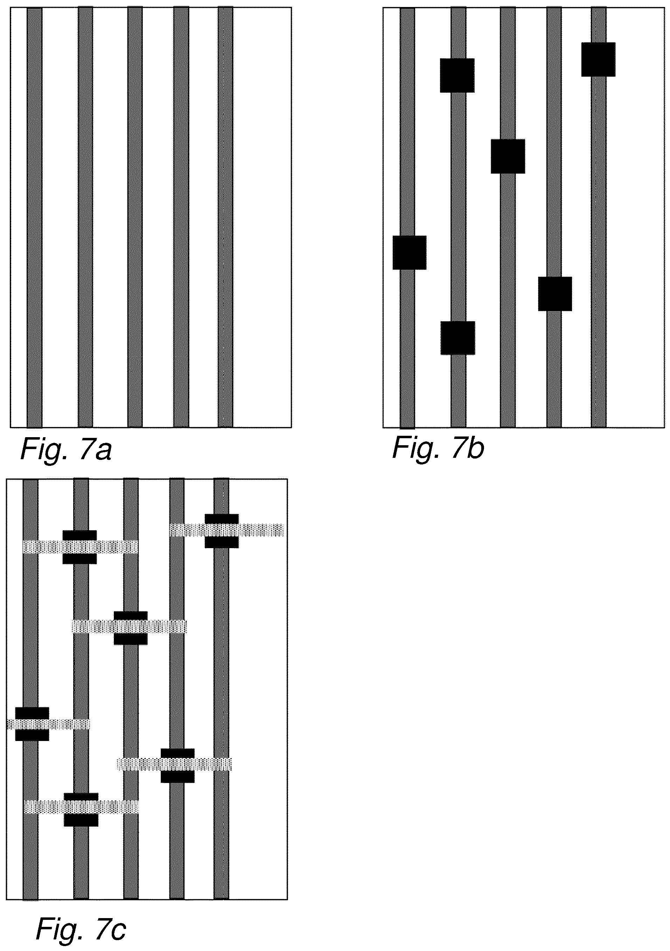

**Figures 7a-7c** schematically show an example of an embodiment of manufacturing a substrate. Shown in **figure 7a****,** multiple main lines of at least two mesh electrodes are printed or patterned on a substrate.

In figure 7b, dielectric material is printed on the main lines. **Figure 7c** shows printing of conductive material over the dielectric and joining two main lines of the same mesh electrodes. In an embodiment, patterning of main lines is combined with direct printing of dielectric patches and interconnecting lines.

In an embodiment, the dielectric can be printed in black, which can then be used as an optical mask to pattern via photolithography a thick resist on top. This resist pattern can be used as a spacer when the substrate is combined with a second substrate into a light modulator.

The dielectric could also be used as a spacer itself, for example by making it thick enough. This could be done by ensuring that electrodes from the other substrate in the light modulator are not at the same position. The latter could be allowed though, e.g., if insulation is arranged therebetween.

Note that in the embodiments of figures 7a-7c the multiple main lines of the mesh electrodes are in a same plane parallel to the substrate.

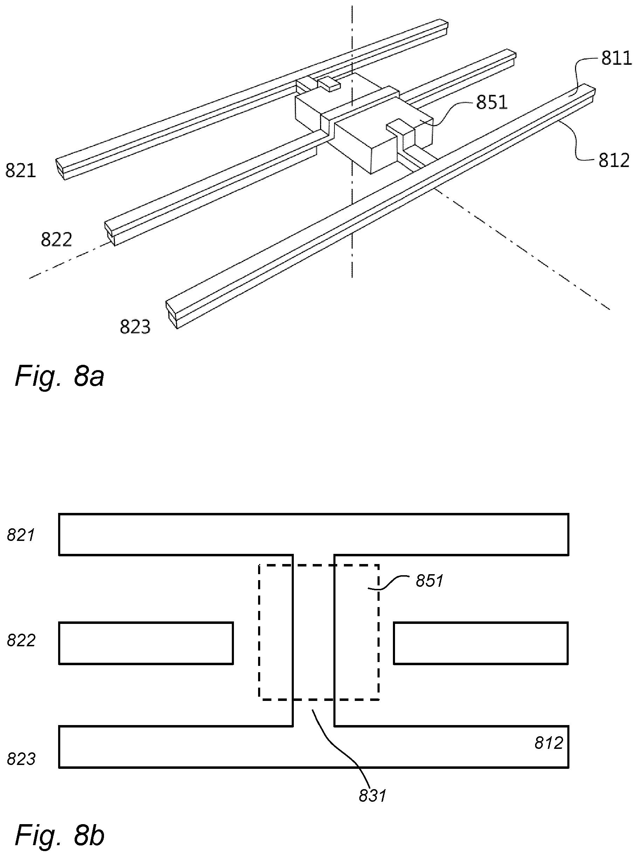

**Figure 8a** schematically shows an example of an embodiment of a crossing point. For example, the crossing point of figure 8a may be created using a process such as illustrated with figures 6a-6g. The lower level of figure 8a is shown schematically in **figure 8b****.**

Shown in figures 8a and 8b are three main lines: main lines 821, 822 and 823. Main lines 821 and 823 belong to the same first mesh electrode. Main line 822 belong to a different, second mesh electrode. Main lines 821 and 823 are connected through an interconnecting line 831. The interconnecting line 831 runs beneath a dielectric 851, as is visible in the plan view of figure 8b. The dielectric 851 is indicated with a dashed line in figure 8b. Main line 822 runs over dielectric 851. Preferably, dielectric 851 is transparent. Note that the main lines 821-823 comprise metal on two levels: a lower level 812 and an upper level 811, except where main line goes over the dielectric in which case only upper level 811 is used, or when a main lines goes under the dielectric in which case only the lower level 812 is used. This construction avoids the use of vias to connect main lines to interconnecting lines. The lower level 812 is also schematically shown in figure 8b.

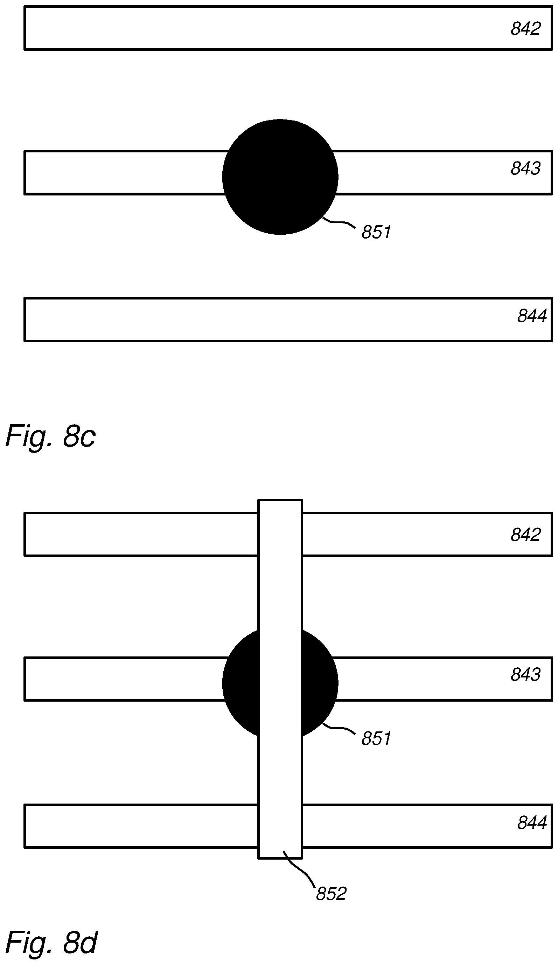

**Figure 8c-8e** schematically shows an example of an embodiment of manufacturing a crossing point. Shown in figure 8c are three main lines: main lines 842, 843 and 844. On main line 843 an insulating patch 851 is applied, e.g., by patterning or direct printing. Shown in figure 8d, a connective bridge 852 is applied on top of the insulating patch. The connective bridge 852 is an example of an interconnecting line.

The connective bridge electrically connects two main lines of the same mesh electrode, that it is a conductive bridge. The connective bridge is insulated from the other meshes on this or another substrate. If a connective bridge were to be connected to another mesh electrode, a short circuit may result. The conductive bridges are preferably made from a conductive material, in particular, metal traces, but could also me made from other materials, e.g., semiconducting materials.

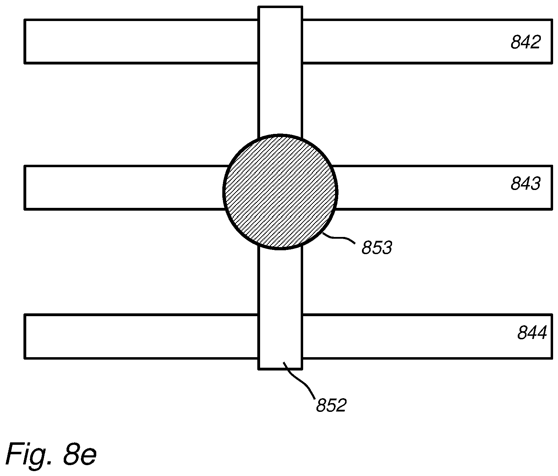

Optionally, in figure 8e, further components may be arranged on top of the connecting bridge. For example, a spacer 853 may be applied. The spacer causes a distance to be kept to another substrate in a light modulator. For example, the two substrate may be arranged in a light modulator so that the spacer touches both substrates.

The spacer may comprise a current controlling component configured to control a current between a first mesh electrode on a first substrate and a second mesh electrode on the second substrate. The spacer may be a dielectric to block current. For example, the current controlling component may be arranged to allow current to pass if the voltage difference exceed a threshold and to block current if not. For example, the spacer may comprise a Zenner diode. The number of spacers with current controlling functionality, may be limited to one or more or all of the spacers.

The spacer 853 shown in figure 8e is arranged on a crossing point; it is arranged at a location where two mesh electrodes cross each other; in this case where an interconnect between main lines 842 and 844 of the same mesh electrode cross the main 843 of a different electrode. In addition, or instead, one may arrange spacers on a substrate at different locations, e.g., not at crossing points.

In an embodiment, one or more spacers are arranged between a first substrate and second substrate of a light modulator, wherein the spacer electrically connects to a mesh electrode on the first substrate, but does not electrically connect to a mesh electrode on the second substrate. At the second substrate, the spacer may be connected to the controller. In particular, one could have at least one such connective spacer for each mesh electrode on the first substrate. In this way, all mesh electrodes can be connected from one side of the light modulator, e.g., from one side of the light modulator. The connective spacer is conductive and preferably transparent. It may be constructed as a conductive pilar.

For example, in an embodiment, a first mesh electrode on the first substrate may be electrically connected to a conductive spacer, e.g., by placing the spacer on top of the first mesh electrode, or by connecting the conductive spacer and mesh electrode, e.g., by a metal trace. The conductive spacer may then connect to a connection point at the second substrate. For example, the conductive spacer may connect to a via arranged in the second mesh, e.g., the via may be opposite the conductive spacer. For example, the conductive spacer may be connected to a further electrode, e.g., a metal. The connecting point is then connected to a controller, e.g., for controlling potential on the mesh electrode of the first substrate. This enables powering electrode meshes of both substrates from one side of the light modulator.

If there are more than two substrates stacked on top of each other, e.g., three or more. Then the mesh electrodes in a first substrate may be connected to a second substrate through conductive spacers, which are in turn connected to the third substrate through conductive spacers, and so on, until a final substrate. The mesh electrodes on a substrate may thus connect through one or more conductive spacers arranged between the substrate to a connecting point at the final substrate. This allows controlling of all mesh electrodes in the stack from one side of the light modulator.

Providing spacers between the substrates in a light modulator, such as a light modulator used in dynamic glazing is advantageous also with interdigitated electrodes which are not mesh electrodes. An example of such dynamic glazing is a dynamic glazing comprising a light modulator, wherein the light modulator comprises: a first substrate and a second substate facing each other, multiple interlaced electrodes extending in a two-dimensional pattern across the first substrate and across the second substrate, an optical layer between the first and second substrates, the optical layer comprising a fluid comprising particles, wherein the particles are electrically charged or chargeable. As with mesh electrodes a controller may be connected or connectable to the electrodes on the substrates. Spacers may be arranged on the first and/or second substrate to space the substrate from each other. A conductive spacer may be connected to an electrode on one substrate, and insulated from the electrodes on the opposite substrate, wherein the spacer may be connected to the controller through a connection point, e.g., through a further electrode, a via, etc., on the opposite substrate, including the backside of the opposite substrate. In an embodiment, connection points to the electrodes on a substrate may be arranged on a backside of a substrate, e.g., connection points to electrodes on the substrate. The connection points can be arranged near an edge of the light modulator. Connection points to electrodes on opposite substrates may also be provided, e.g., connected through spacers. In an embodiment, all electrodes in a light modulator can be controlled from the same side of the substrate.

It is also possible to use semiconducting spacers with non-mesh electrodes, for example, a spacer may be connected to an electrode on the first substrate and to an electrode on the second substrate., wherein the spacer comprises semiconducting material, e.g., a Zenner diode, e.g., a one-way or two-way Zenner diode.

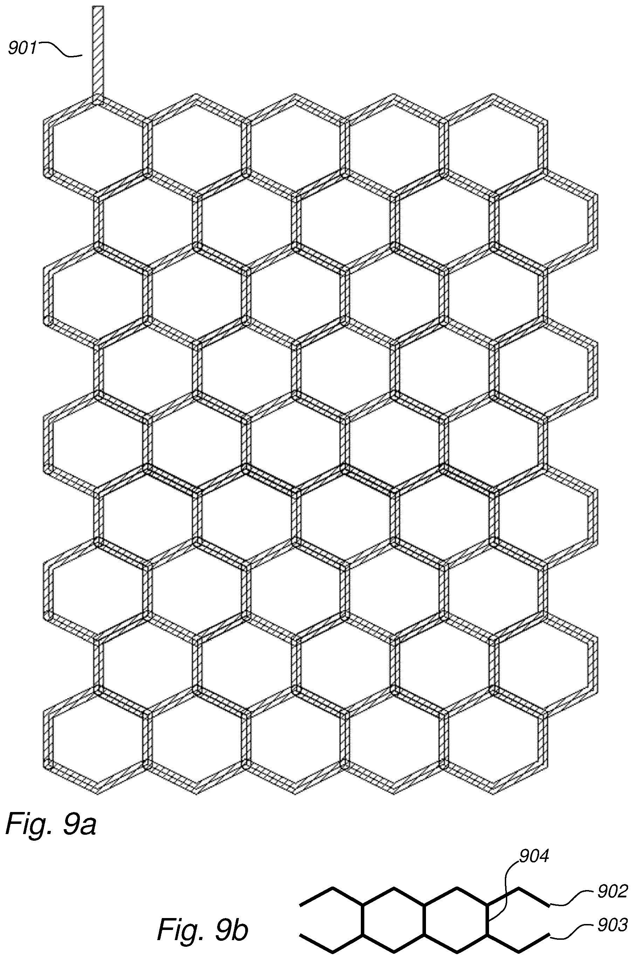

**Figure 9a** schematically shows an example of an embodiment of a mesh-electrode 901. The two-dimensional pattern of the mesh electrode across the substrate comprises a regular hexagonal pattern. Advantageously, the pattern fills the substrate. Such a substrate is also referred to as a tiling-in the sense that one tile is regularly repeated over the substrate. Instead of a hexagonal tiling as shown, one may use, e.g., a triangle tiling, a square tiling, and so on. Note that the mesh electrode shown in figure 9a is entirely in one plane, although other mesh electrodes that are combined with it on the same substrate may lie in a different plane. A hexagonal pattern such as shown in figure 9a can be regarded as a combination of main lines and interconnecting lines. For example, as shown in **figure 9b****,** the pattern can be regarded a multiple main lines, in the form of a regular sawtooth pattern; shown in figure 9b are main lines 902 and 903. Between the main lines, interconnecting lines are applied, forming the main lines into a mesh electrode. Shown in figure 9b are three interconnecting lines, one of which has numeral 904.

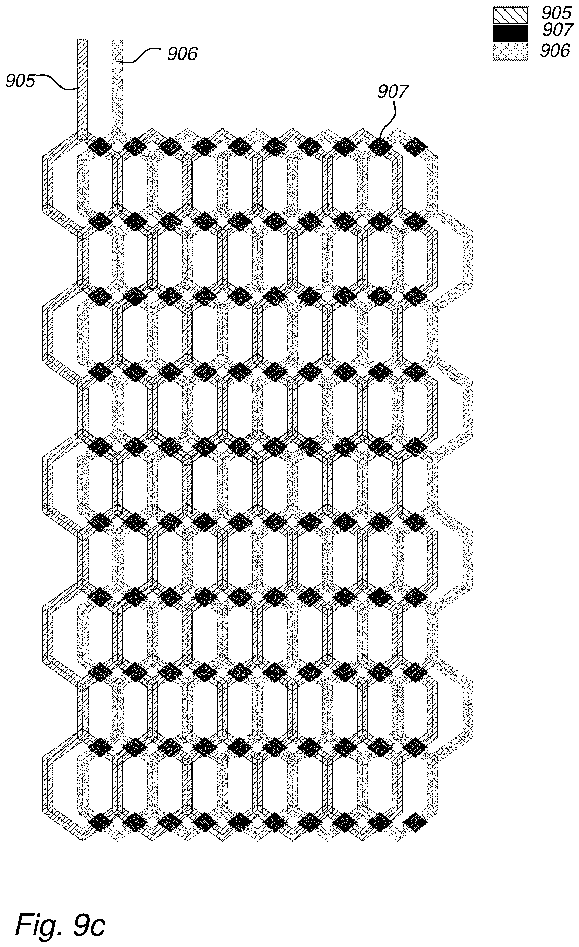

**Figure 9c** schematically shows an example of an embodiment of a substrate. Two mesh electrodes: mesh electrode 905 and mesh electrode 906 with a hexagonal pattern are applied on the substrate. For example, to manufacture the substrate of figure 9c, one may apply a first mesh electrode on the substrate, then applying current controlling components 907 on the first mesh electrode, e.g., a dielectric and/or a diode, finally, applying a second mesh electrode on the substrate, the second mesh electrode being isolated from the first mesh electrode through the current controlling components. The mesh electrodes and/or dielectrics may be applied by patterning and/or direct printing. Note that relatively little dielectric is needed, compared to the area of the mesh electrode.

A mesh electrodes may have a period after which the pattern repeats. For example, the period may be a vector indicating a repetition of a cell of the mesh electrodes. The second mesh electrode may be shifted with respect to the first mesh electrode over half a period. If there are more than two mesh electrodes, e.g., *n*, where *n* may be larger than 2, then mesh electrode *k* may be shifted over (*k* - 1)/*n* period with respect to the first mesh electrode; herein the mesh electrodes are numbered from 1 to *n*.

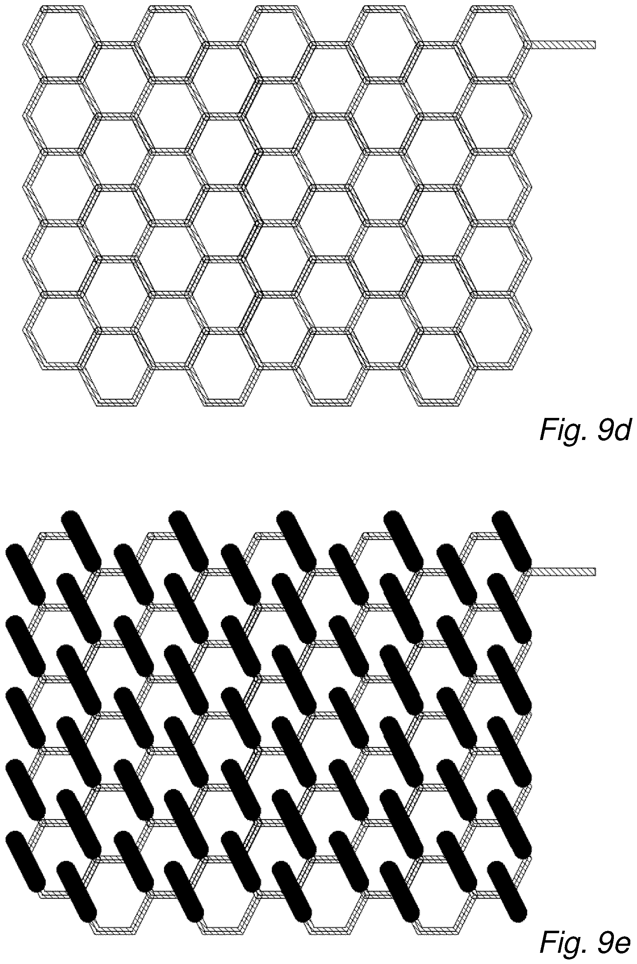

More than two mesh electrodes may be applied when using non-straight mesh electrodes including of the regular type shown in figure 9a. For example, **figures 9d-9h** schematically shows an example of an embodiment of manufacturing a substrate,

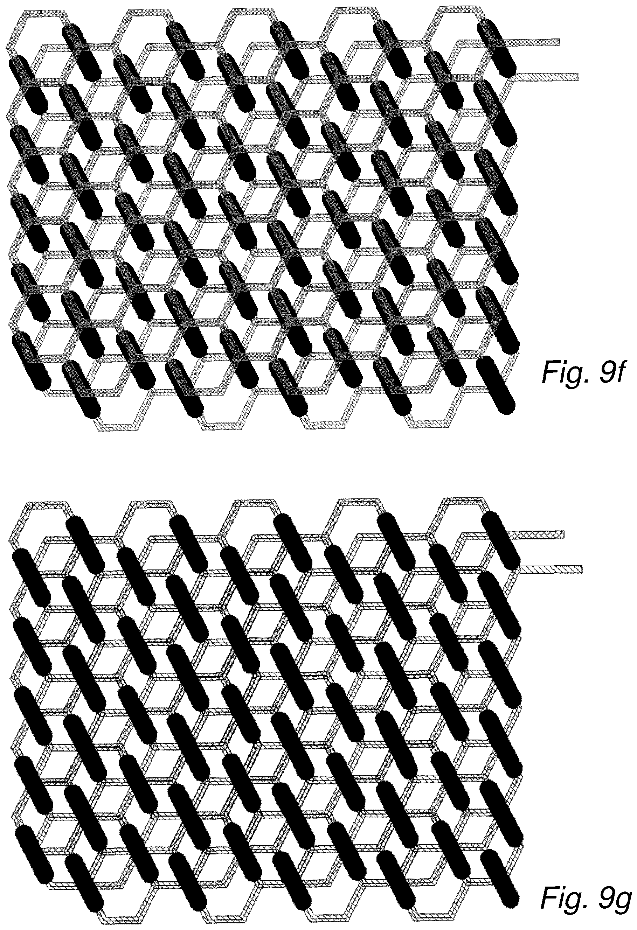

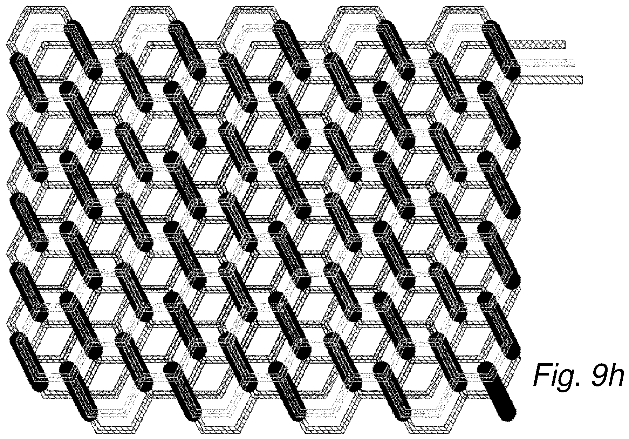

For example, to manufacture the substrate of figure 9h, one may apply a first mesh electrode on the substrate, as shown in figure 9d, then apply current controlling components on the first mesh electrode, e.g., a dielectric and/or a diode, as shown in figure 9e. Then a second mesh electrode is applied, as shown in figure 9f. The second mesh electrode is isolated from the first mesh electrode through the current controlling components. Next, a second set of current controlling components is applied as shown in figure 9g, on top of which the third mesh electrode is applied. The mesh electrodes and/or dielectrics may be applied by patterning and/or direct printing.

The three mesh electrodes are shifted with respect to each other, so that they can establish an electric field over the substrate as needed to control, e.g., a light modulator. As an example, the mesh electrode of figure 9f may be shifted with respect to the mesh electrode of figure 9d by 12.5 micrometer in the horizontal direction and 25 micrometers in the vertical direction.

Substrates with 3 or more mesh electrodes may be used in a light modulator, e.g., for dynamic glazing in a 2+3 configuration or a 3+3 configuration, and so on. That is, a substrate with 2 mesh electrodes may be arranged opposite a substrate with 3 mesh electrode (2+3), a substrate with 3 mesh electrodes may be arranged opposite a substrate with 3 mesh electrode (3+3), and so on.

A strip of electrically connecting foil may be attached to at least one edge of the substrate. The strip comprises conductors connecting to the mesh electrodes on the substrate. The strip may be cut, possibly together with the substrate. A connector can be applied to a remaining part of the strip to connect the mesh electrodes through conductors of the foil, through the connector and to the controller. In an embodiment, a strip of foil may be applied to at least two edges. For example, the two edges may share a common corner of the substrate. For example, the two edges may be opposite edges of the substrate. For example, the two opposite edges may be orthogonal to the main-lines. For example, the two opposite edges may be parallel to the main-lines. In an embodiment, strip of foil is applied to all edges of the substrate.

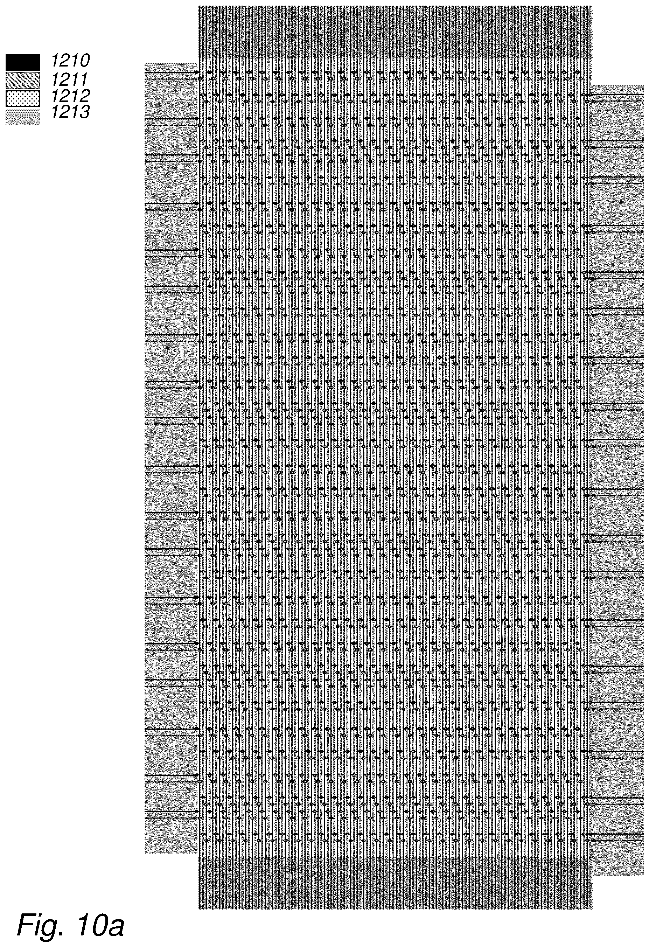

**Figures 10a-10b** schematically show an example of an embodiment of a substrate. Shown is a first mesh electrode 1210, a second mesh electrode 1211, and a dielectric 1212, surrounding the mesh electrodes is an electrically connecting foil 1213. There are various ways to connect the mesh electrodes on the substrate(s) to a controller, e.g., on a PCB. For example, the mesh-electrodes may connect through a cable assembly, a PCB mount connector, etc., using foil 1213 has the added advantage though that it can be cut in to support different connecting points.

For example, foil 1213 may comprise conductors connecting to the mesh electrodes. Foil 1213 itself is typically an isolator. For example, the conductors may be etched copper conductors. Foil 1213 be made of a polyimide material. Foil 1213 may comprise a flexible printed circuit (FPC). For example, the foil may be a polyimide interconnect foil, to connect the substrate, e.g., glass, to a circuit board. Note that foil 1213 is not present behind the mesh electrodes. Typically, only the end of the foil is sticked to the substrate and aligned to the electrode pattern. Foil 1213 connects the substrate to a PCB. For example, a floating plastic foil.

Foil 1213 may be present only to allow installation of the substrate. The substrate itself may be glass, or a plastic substrate. The latter may or may not be the same type of plastic as foil 1213. Foil which is not used to connect the mesh electrodes may be cut a way.

Applying the foil to the mesh electrodes and the substrate may use an adhesive. Typically, the adhesive is configured to conduct electricity only in one direction, e.g., vertically but not laterally; for example, the adhesive may be doped with gold particles. The adhesive may be applied between the electrode pattern on the substrate and the foil.

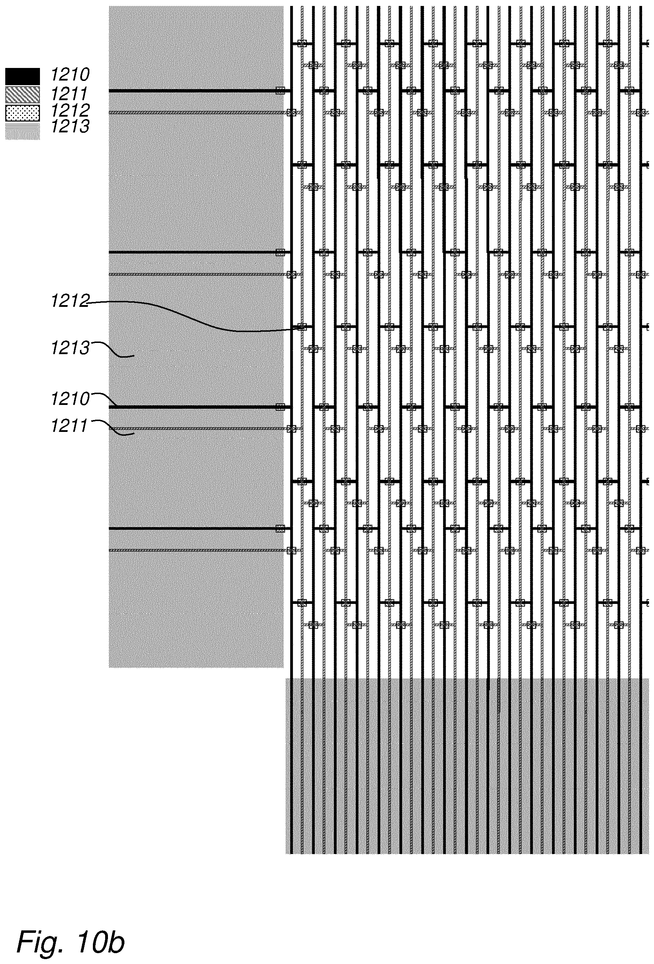

Figure 10a shows a zoomed-out picture and figure 10b shows an enlarged detail. The mesh electrodes 1210 and 1211 each comprise multiple main lines connected together with multiple interconnecting lines. Where an interconnecting line crosses a main line, a dielectric 1212 is applied between them. Note that the foil supports connecting lines. On the left and right side the connecting lines connect to the first two main from the edge of the substrate, while on the top and bottom connecting lines connect to all the main lines. Numeral 1210 and 1211 in figure 10b indicate a connecting line of each mesh electrode. Connecting lines at the left or right, or top or bottom are optional, as long as both mesh electrodes remain connectable from outside the substrate.

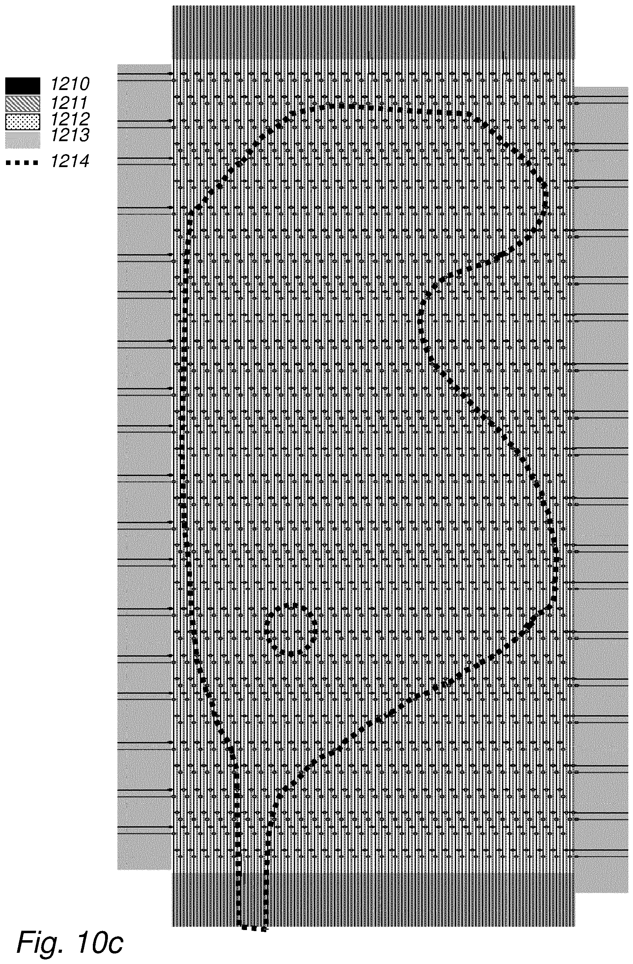

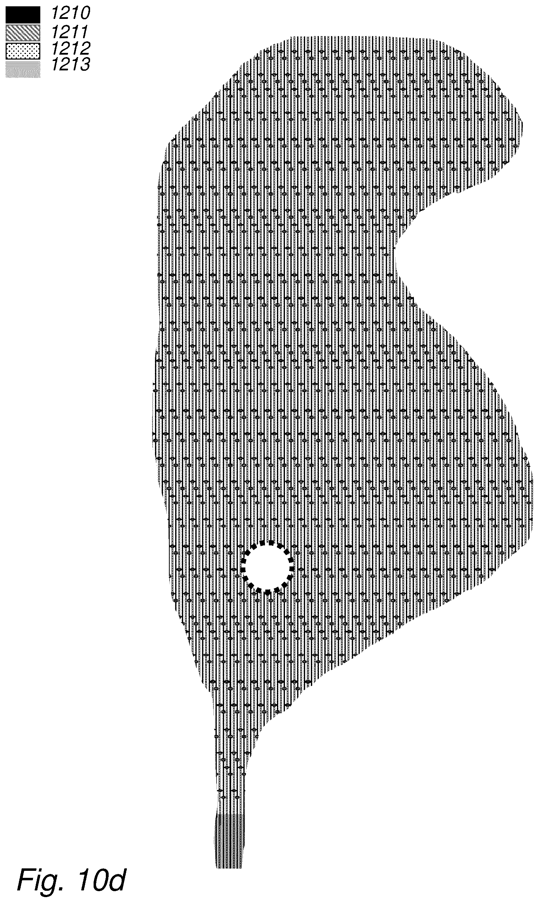

An advantage of this embodiment is that it can be cut. In Figure 10c a cutting line 1214 of a shape is indicated. The actual shape is arbitrary so long as a connecting point for the substrate remains with access to at least one main line of each mesh electrode. Even holes can be cut in the shape. In this example, all of the foil, with all of the connecting lines are cut off, except a strip at the bottom. The strip contains connecting lines for each of the mesh electrodes. For example, a connector may be applied to the strip. **Figure 10d** schematically shows an example of an embodiment of cutting out a substrate. Note that any non-rectangular shape can be obtained in this way. The cutting method is advantageous as it can support windows of arbitrary shape. For example, the cutting method may be used to cut dynamic glazing for cars. If the substrate is flexible, the method can also support any curve in the dynamic glazing as well.

In the example shown in figures 10a-10d the cutting takes place on the substrate before it is assembled into dynamic glazing. This is not necessary, however. The substrate can be combined with one or more other substrate into a light modulator, e.g., for dynamic glazing. The two substrates can be cut together. For example, they can be cut using laser or the like. The optical layer in the assembled light modulator can be sealed during or after the cutting, e.g., by melting or gluing.

The substrate of figures 10a-c allows cutting a sub-segment from a substrate. If the cut-out pane shares a part with an edge of the original substrate then the electrodes on the pane can be easily connected to a controller. Arbitrary segmentation of the substrate with easy connectability is also possible, e.g., using transparent contacts placed on the outside surfaces of the two (or more) substrates. These transparent contacts can be applied during or after the manufacture of a mother substrate and may be connected to the electrodes with conductive through vias in the substrate. If the contacts are made during the manufacturing of the mother substrate, they can be positioned with regular offset from one part of the electrode mesh to the next. This enables a more or less infinite number of sizes for the final modulator.

Additional vias connecting each of the mesh electrodes may be created between the mesh electrode and the other side of the substrate. It is then possible to cut the substrate/product wherever and still be capable of interconnecting it. Density of vias will indicate the minimum step of cutting which is possible.

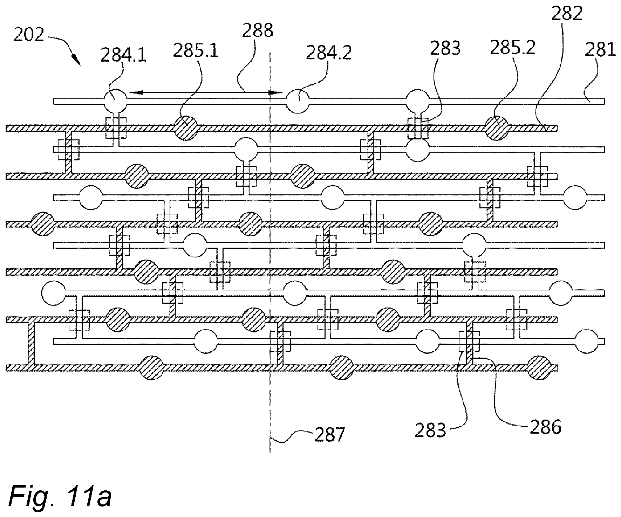

**Figure 11a** schematically shows an example of an embodiment of a substrate 202. The substrate 202, e.g., a glass or plastic substrate or the like, is provided with a first mesh electrode 281 and a second mesh electrode 282. In this case, the main lines of mesh electrodes 281 and 282 are provided on the same side of the substrate. The two mesh electrodes are interdigitated. Between main-lines of the same substrate interconnecting lines are provided. One of the interconnecting lines is provided with a reference number: interconnecting line 286. Where a main-line and an interconnecting line cross each other a dielectric 283 is arranged in between them. The dielectric 283 may be replaced with a different type of current controlling component as explained herein. Although two mesh electrodes are shown, there could be more mesh electrodes. The surface on which the main lines are applied will later be in fluidic contact if the substrate is integrated in a light modulator. For example, two substrates such as shown in figure 11a may be arranged opposite each other, with their mesh electrodes facing one another. In this example, all of the mesh electrodes including the interconnecting lines are applied to the same side of the substrate; this is not necessary, e.g., some or all of the interconnecting lines may run via the backside as well.

Each of the mesh electrodes in figure 11a is provided with multiple vias that connect the mesh electrode to the other side of the substrate. If substrate 202 is cut, then the controller may be connected to a via of each of the mesh electrodes. This approach has the advantage, that even a part of the substrate cut out in the middle, that may not share part of an edge of substrate 202 can be connected. In the example shown, some vias connect to an interconnecting line, some vias do not.

For example, suppose that substrate 202 is cut along cutting line 287, so that in this case, the substrate 202 is cut in a left part and a right part. The left part may also be connected through the side opposite the mesh-electrodes, e.g., at vias 284.1 for the first mesh electrode and to via 285.1 for the second mesh electrode. The right part may be connected the side opposite the mesh-electrodes, e.g., at vias 284.2 for the first mesh electrode and to via 285.2 for the second mesh electrode.

In an embodiment, the vias extend across the substrate in a random pattern, a regular pattern, and/or a predetermined pattern. For example, a density of the vias of each mesh electrode is above a minimum threshold. Density of vias will indicate the minimum step of cutting that can be considered. For example, if there is a via on average every cm along the main lines, then one could cut quite small panes from the substrate, of about a cm plus twice the cutting loss. Alternatively, one could put the vias at determined places, e.g., depending on what panes are to be cut from the substrate. This has the advantage that far fewer vias will be necessary, although it may require higher accuracy from the cutting.

Figure 11a show a distance 288 between successive vias of mesh electrode 281. The maximum distance between successive vias of the mesh electrodes is related to the size of smaller substrates that can be cut from a mother substrate, e.g., substrate 202. In an embodiment, the vias are place on the main lines, and the maximum distance is the maximum distance measured along a main line. For example, the maximum distance may be at most 10 cm, at most 1 cm, at most 1mm, etc.

Vias can be created, e.g., by drilling holes in substrates and filling the hole up with a conductive material. The substrate can also be made of conductive material lines that are separated with a dielectric, so the electrode lines of a mesh electrode are as thick as the substrate. Another approach is to disperse conductive particles in a polymer. The contacting may be done with ACF bonding, e.g., by pressuring the substrate/doped polymer to ensure connections from one side of the substrate to the electrode meshes patterned on the other side. For example, connecting may be done with laser welding. For example, laser welding may be used create a track from a via ending at the back of the substrate to an edge of the substrate.

Substrates with multiple vias can be combined with foil connections at the edges of the substrate as in figures 10a-10d; This is not necessary though.

For example, in an embodiment the mother substrate may be much larger that the panes used in end-products. For example, mother substrate may measure, say 6m by 6m, or even larger, e.g., 6m by 30m, or the like. Panes cut from a mother substrate may be much smaller, say 30cm by 30cm, depending on the application. In this manufacturing method, it is likely that some panes do not share an edge with the mother substrate. Advantageously, the mesh electrodes in a cut part of a substrate are connected from two points that are close together, e.g., on a same point on the same edge of the cut pane. In an embodiment, the vias may be spaced as fine as a via per mm. The vias may be arranged in a wide array, but can also be arranged, exactly where they are needed.

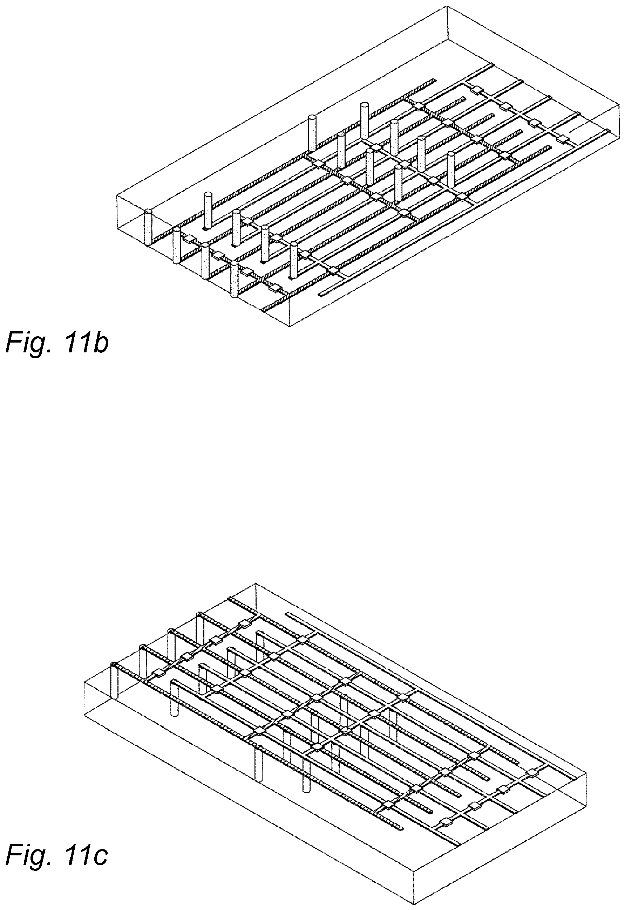

**Figure 11b and 11c** schematically show 3d rendering of an example of an embodiment of a substrate. The substrates shown in figure 11b and 11c are of the type shown in figure 11a. In figure 11c, the mesh electrodes are on the top surface of the substrate. In figure 11b, the mesh electrodes are on the bottom surface of the substrate. In a light modulator, an optically active layer can be inserted between the two layers. Particles in a fluid of the optical may be controlled by putting a voltage on the mesh substrates, connected through a side of the substrate that is not in fluid contact.

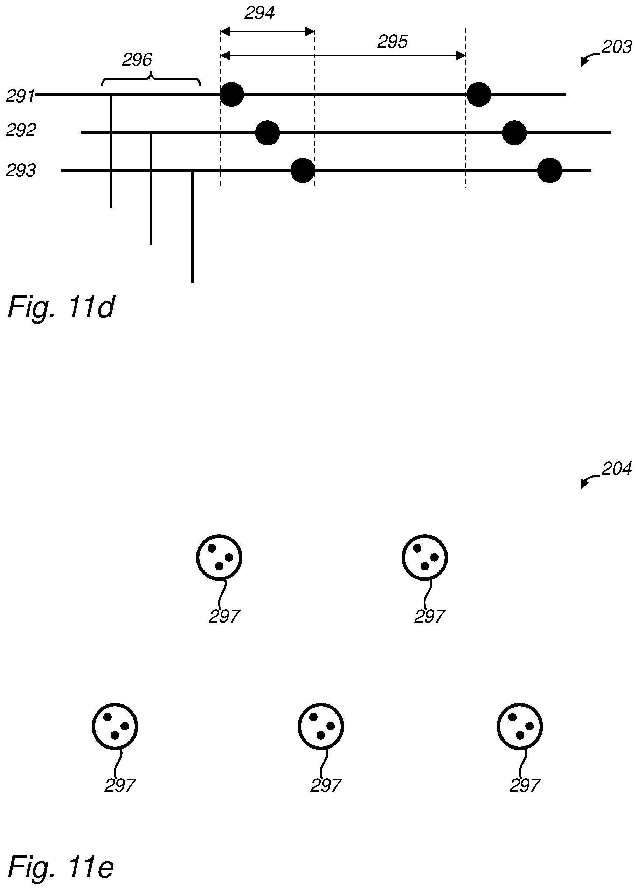

**Figure 11d** schematically shows an example of an embodiment of a substrate 203. Figure 11d shows an example substrate having multiple mesh electrodes. In this example, three mesh electrodes are used: mesh electrodes 291, 292 and 293. The mesh electrodes may have multiple main lines and multiple interconnecting lines. Of each mesh electrodes one main line is shown. The interconnecting lines are schematically indicated at 296. As in figure 11a-11c, the mesh electrodes are provided with vias that connect the mesh electrode from the side of the substrate on which the mesh electrodes are applied to the other side. The mesh electrodes can be connected through one of these vias. The vias are indicated with small solid circles.

The vias are arranged in multiple groups of vias across the substrate. Each one of the mesh electrodes is connected to one of the vias in each group. Two such groups are shown in figure 11d, demarcated with dashed lines. Within a group the distance between two vias is smaller than a lower spacing distance 294. The groups themselves are spaced at a distance of at least a higher spacing distance 295. In an embodiment, distance is measured along a projection on the direction of the main lines. In an embodiment, Euclidean distance over the substrate is used.

There may be additional vias for other purposes on a substrate.

**Figure 11e** schematically shows an example of an embodiment of a substrate 204. Shown in figure 11e is the backside of a substrate opposite the side with the mesh electrodes. Shown are groups 297. Each group has a via for each of the mesh electrodes. Within a group the vias are close together. The distance between groups is much larger. For example, the groups may be spaced regularly across the substrate. In figure 11e, a regular hexagonal spacing is used, but other regular spacing are also possible.

For example, the lower spacing bound may be 1 mm. A connection can be made to all substrates within a distance of 1mm. It is convenient for connecting if the used vias are close together. For example, a single connector may be used. On the other hand, the larger spacing of the groups means that fewer vias in total are needed. This reduces the optical impact of the spacers, and reduces manufacturing complexity.

The distance between one group 297 to the next may be at least the higher bound, whereas the distance between two vias within on group 297 may be at most the lower bound. The lower spacing bound is smaller than the higher spacing bound. For example, the higher spacing bound may be at least 10 times the lower spacing bound.

The number of mesh electrodes in figures 11d and 11e may be higher or lower than three. For example, there may be two mesh electrodes, in which case, pairs of vias are spread across the substrate.

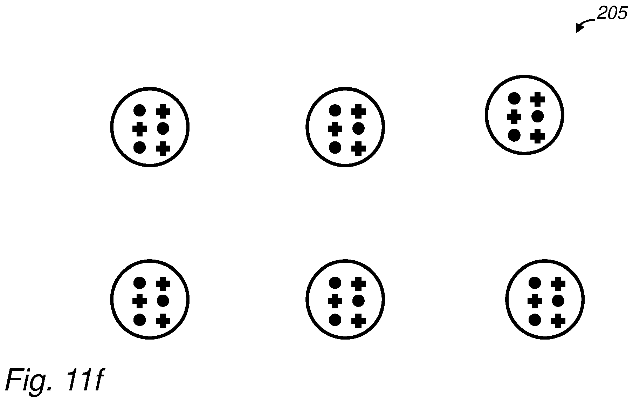

**Figure 11f** schematically shows an example of an embodiment of a substrate 205. Shown in figure 11f is the backside of a substrate opposite the side with the mesh electrode and opposite a second substrate. Shown are groups of connecting vias. In figure 11f, the vias indicated with small black circles connect to a mesh electrode on the shown substrate. In this case there are three mesh electrodes on the substrate 205 but there may be two. In figure 11f, the vias indicated with small black crosses connect to a mesh electrode on the substrate opposite to the shown substrate through a connective substrate, e.g., as discussed herein. In this case there are three mesh electrodes on the substrate opposite to substrate 205 but there may be two. In this light modulator there are two substrates, but there could be more.

Each group has a via for each of the mesh electrodes in the light modulator. Within a group the vias are close together. The distance between groups is much larger. For example, the groups may be spaced regularly across the substrate. In figure 11f, a regular square spacing is used, but other regular spacing are also possible.

The vias in a group, e.g., as shown in figures 11d, 11e and 11f form a connecting area on the substrate. Connecting through such a connecting area equalizes distances to a power source, and thus minimize the difference in potential between two points opposite each other on two successive main lines of two mesh electrodes. Distance between the vias may small, e.g., within a 10cm, 5cm, 1cm, or even smaller. As a result potential differences between two opposite points on two main lines can be minimized, as the resistance for the opposite points is about equal, e.g., within 10%, 5%, 1% and below. If there are connecting areas on the multiple substrates, then they are preferably opposite each other. Mesh electrodes may be powered from multiple connecting areas. Also in that case, the connecting areas are preferably small, and are preferably aligned with connecting areas on the opposite substrate. One way to align connecting areas is to use connective spacers.

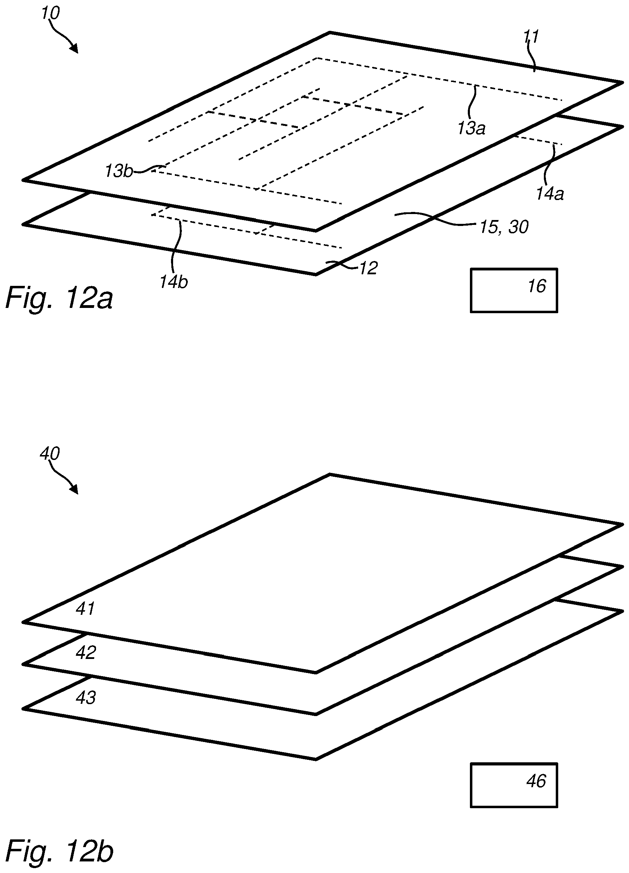

**Figure 12a** schematically shows an embodiment of a light modulator 10, which may be applied in dynamic glazing.

Reference is made to patent application PCT/EP2020/052379, published as WO2020161005A1; this application comprises advantageous designs for light modulator, which may be further improved, e.g., by including mesh electrodes as explained herein.

Light modulator 10 can be switched electronically between a transparent state and a non-transparent state and vice versa, or between a reflective state and a non-reflective state and vice versa. Light modulator 10 comprises a first substrate 11 and a second substrate 12 arranged opposite to each other. On an inner-side of first substrate 11 at least two electrodes are applied: shown are electrodes 14a, 14b. These at least two electrodes are together referred to as electrodes 13. On an inner-side of second substrate 12 at least two electrodes are applied: shown are electrodes 15a, 15b. These at least two electrodes are together referred to as electrodes 14.

Advantageously electrodes 14a, 14b and electrodes 15a, 15b are mesh electrodes according to an embodiment. In figure 12a two interconnections are shown, although in practice there may be many more.

A fluid 15 is provided in between said substrate. The fluid comprises particles 30, e.g., nanoparticles and/or microparticles, wherein the particles are electrically charged or chargeable. For example, particles may carry a charge on their surface intrinsically. For example, the particle may be surrounded by a charged molecule.

The electrodes are arranged for driving particles 30 to move towards or away from electrodes, depending on the electric field applied. The optical properties, in particular the transparency or reflectivity of the light modulator depends on the location of particles 30 in the fluid. For example, a connection may be provided for applying an electric field to the electrodes.

A controller 16 is configured to apply an electric potential to the mesh electrodes 13a, 13b, 14a and 14b to obtain an electric field between the multiple mesh electrodes. In this way electrophoretic movement of the particles is provided towards or from one of the multiple mesh electrodes. This in turn causes modulation of the optical properties of the light modulator. The controller may comprise, e.g., a microprocessor or a state machine, and may be configured to generate a waveform for applying on the mesh electrodes. For example, the controller may comprise an amplifier connectable or connected to a power source for amplifying the waveform. A controller may be implemented as a single integrated device, e.g., a microchip, or may be distributed over multiple sub-controllers, e.g., implemented as multiple microchips. The multiple sub-controller may communicate with each other, e.g., using wired or wireless communication. For example, a sub-controller may be configured to control one of the multiple substrates, or one of multiple-meshes, or a segment in the light modulator, and so on.

Controller 16 may be located at various places. For example, controller 16, and/or sub-controllers if any, may be located external to the light modulator. For example, the controller may be connected to the mesh electrodes through a wire, e.g., a cable. Controller 16 may also be integrated, in whole or in part, in the light modulator. For example, a controller may be installed between the two substrate, on the glass, or as printed circuit, etc. For example, each of the substrates may comprise a controller for controlling the mesh electrodes on the substrate. The sub controllers may optionally be connected to master controller outside the light modulator.

In an example, substrate 11 and substrate 12 may be optically transparent outside of the electrodes, typically > 95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator a substrate material is selected from glass, and polymer.

In another example, one substrate, such as a bottom substrate 12, may be reflective or partially reflective, while the top substrate 11 is transparent. The optical properties, in particular the reflectivity of the light modulator depends on the location of particles 30 in the fluid. When the panel is in the open state (vertical drive), the particles will mostly be located between opposite electrodes of the two substrates, such that incident light can pass through the transparent top substrate and the optical layer relatively unhindered, and is reflected or partially reflected on the bottom substrate.

The distance between the first and second substrate is typically smaller than 30 µm, such as 15 µm. In an exemplary embodiment of the light modulator a distance between the first and second substrate is smaller than 500 µm, preferably smaller than 200 µm, preferably less than 100 µm, even more preferably less than 50 µm, such as less than 30 µm.

In an example the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example the device may be provided in at least one flexible polymer. As such the modulator may be attached to any surface, such as by using an adhesive.

Particles 30 may be adapted to absorb light and therewith preventing certain wavelengths from passing through. Particles 30 may reflect light; for example, the reflecting may be specular, diffusive, or in between. A particle may absorb some wavelengths, and reflect others. Particles may also or instead emit light, e.g., using phosphorescence, fluorescence, or the like. Even the fluid may emit light, which emittance is modulated by changing the location of particles.

In an exemplary embodiment of the light modulator a size of the nanoparticles is from 20-1000 nm, preferably 20-300 nm, more preferably smaller than 200 nm. In an exemplary embodiment of the light modulator the nanoparticles/microparticles may comprise a coating on a pigment, and preferably comprising a core. In an exemplary embodiment of the light modulator the coating of the particles is made from a material selected from conducting and semi-conducting materials.

In an exemplary embodiment of the light modulator the particles are adapted to absorb light with a wavelength of 10 nm-1 mm, such as 400-800 nm, 700 nm -1 µm, and 10-400 nm, and/or are adapted to absorb a part of the light with a wavelength-range falling within 10 nm-1 mm (filter), and combinations thereof.

In an exemplary embodiment of the light modulator the particles are electrically charged or chargeable. For example, a charge on the particles may be 0.1e to 10e per particle (5*10⁻⁷-0.1 C/m2).

In an exemplary embodiment of the light modulator the fluid is present in an amount of 1-1000 g/m2, preferably 2-75 g/m2, more preferably 20-50 g/m2, such as 30-40 g/m2. It is a big advantage that with the present layout much less fluid, and likewise particles, can be used.

In an exemplary embodiment of the light modulator the particles are present in an amount of 0.01-70 g/m2, preferably 0.02-10 g/m2, such as 0.1 -3 g/m2.

In an exemplary embodiment of the light modulator the particles have a color selected from cyan, magenta, and yellow, and from black and white, and combinations thereof.

In an exemplary embodiment of the light modulator the fluid comprises one or more of a surfactant, an emulsifier, a polar compound, and a compound capable of forming a hydrogen bond.

Fluid 15 may be an apolar fluid with a dielectric constant less than 15. For example, the dielectric constant may be measured at a frequency. For example, the dielectric constant less than 15 at a frequency of 1kHz. Alternatively, the dielectric constant may be measured at a different frequency, e.g., at 60Hz or above. Note that that water has a dielectric constant of 80 for every frequency below 10GHz. An advantage of a lower dielectric constant, such as 15 of less, is that it increases the capability of the liquid to hold a high electric field without breaking down, while decreasing the conductivity of the liquid at low frequencies, in particular at frequencies where the light modulator may be operated.

In an exemplary embodiment of the light modulator the fluid has a relative permittivity εr of less than 100, preferably less than 10, such as less than 5. In an exemplary embodiment of the light modulator, fluid 15 has a dynamic viscosity of above 10 mPa.s.

Electrodes 14a, 14b and electrodes 15a, 15b are in fluidic contact with the fluid. The fluid may be in direct contact the electrodes, or indirectly, e.g., the fluid may contact a second medium with the electrode, such as through a porous layer. In an embodiment, the electrodes cover about 1-30% of the substrate surface. In an embodiment, the electrodes comprise an electrical conducting material with a resistivity of less than 100 nΩm (at 273K; for comparison typically used ITO has 105 nΩm), which is similar to an electrical conductivity >1*10⁷ S/m at 20°C). In an embodiment of the light modulator electrodes comprise copper, silver, gold, aluminum, graphene, titanium, indium, and combinations thereof, preferably copper. The electrodes may be in the form of micro wires embedded in a polymer-based substrate; for example, copper micro wires.

A connection for applying an electric field to the electrodes, wherein the applied electric field to the electrodes provides movement of the nano- and microparticles from a first electrode to a second electrode and vice versa. A connection for applying an electric field to the electrodes may be provided. For example, in an exemplary embodiment of the light modulator an electrical current is between -100-+100µA, preferably -30-+30 µA, more preferably -25-+25 µA. For example, a power provider may be in electrical connection with the at least two electrodes. The power provider may be adapted to provide a waveform power. At least one of amplitude, frequency, and phase may be adaptable to provide different states in the light modulator. For example, the aspects of the power may be adapted by a controller.

Light modulator 10 may comprise one or more segments, a segment being a single optically switchable entity, which may vary in size. The substrates enclose a volume, which may be a segment, at least partly.

The present device may comprise a driver circuit for changing appearance of (individual) segments by applying an electric field. As such also the appearance of the light modulator, or one or more parts thereof, may be changed. For example, a segment may have an area of at least 1mm². The present design allows for stacking to allow for more colors; e.g., for full color applications a stack of two or three modulators could provide most or all colors, respectively.

Having one or more segments allows the light modulator to be controlled locally; this is advantageous for some applications, but not necessary. For dynamic glazing, a light modulator may be used with or without segments. For example, applied in dynamic glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator substrates (11,12) are aligned, and/or electrodes (13,14) are aligned. For example, electrodes 14a, 14b and electrodes 15a, 15b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator, on the other hand when selecting a light modulator for more criteria than the range of transparency or reflectivity, etc., it may be better not to align or not fully align the two substrates. Light modulators can be stacked. For example, two stacked light modulators can be made from three substrates, wherein the middles one has electrodes on both its surfaces. In an embodiment of the light modulator optionally at least one substrate 11,12 of a first light modulator is the same as a substrate 11,12 of at least one second light modulator. For stacked modulators alignment may likewise increase maximum transparency or reflectivity, but it may be detrimental for other considerations, e.g., diffractions.

**Figure 12b** schematically shows an example of an embodiment of a light modulator 40. Light modulator 40 is similar to light modulator 10, except that it comprises multiple optical layers; in the example as shown two optical layers. There may be more than two optical layers. Each optical layer is arranged between two substrates. Light modulator 40 can be regarded as a stack of two-substrate light modulators as in figure 12a. As shown, light modulator 40 comprises three substrates: first substrate 41, second substrate 42 and third substrate 43. Between substrates 41 and 42 is an optical layer, and between substrates 42 and 43 is an optical layer. The optical layers may be similar to those in light modulator 10. A controller 46 may be similar to controller 16. For example, controller 46 may be configured to control electrical potential and/or current on the electrodes of the substrates. For example, in figure 12b, controller 46 may be electrically connected to at least 4 times 2 equals 8 electrodes. Like controller 16, also controller 46 may be embodied over multiple sub-controllers.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

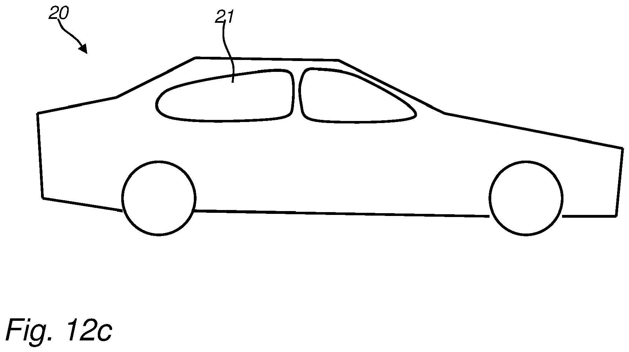

**Figure 12c** schematically shows an example of an embodiment of a car 20 having dynamic glazing for windows 21. This is a particularly advantageous embodiment, since while driving the level of incident lighting can change often and rapidly. Using dynamic glazing in a car has the advantage that light levels can be maintained as a constant level by adjusting the transparency of the car windows. Moreover, the reduced diffraction effect improves safety as it reduces driver distraction. Car 20 may comprise a controller configured for controlling the transparency or reflectivity of windows 21.

The dynamic glazing can also be used in other glazing applications, especially, where the amount of incident light is variable, e.g., buildings, offices, houses, green houses, skylights. Skylights are windows arranged in the ceiling to allow sunlight to enter the room.

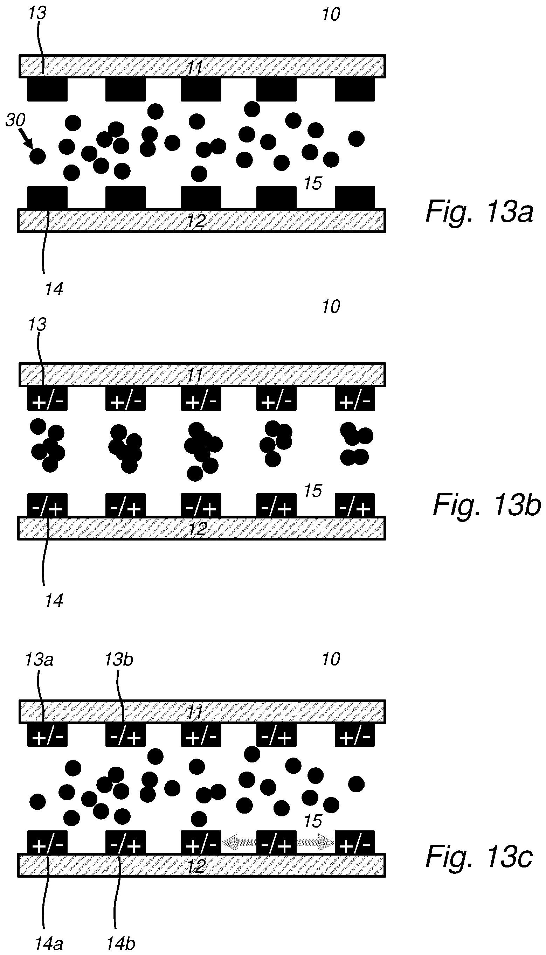

**Figures 13a-13b** schematically show a side view of an embodiment of a light modulator in use. Applying an electric field to the electrodes on the substrates causes an electrical force on the particles. Using this effect, the particles can be moved around and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune grey scales, and driving to non-transparent or non-reflective state. Multiple electrodes may also be used to support multiple segments on the substrate.

**Figure 13a** shows the light modulator without an electric field being applied. No electric force is yet applied on particles 30 suspended in fluid 15, in figure 13a.

In the configuration shown in figure 13a, a conducting electrode pattern, arranged on the top substrate is completely or substantially aligned with a conducting electrode pattern on the bottom substrate. The conducting electrode pattern may be deposited on a transparent or (partially) reflective glass substrate or may be embedded in a plastics substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to substrate that is higher or lower on the page. The same substrates could also be referred to, e.g., as the front substrate and back substrate, since in a glazing application, the substrates would be aligned vertically rather than horizontally.

**Figure 13b** shows the light modulator wherein, say at an instance P1, a potential +V1 is applied to each micro wire electrode on the top substrate, while a negative voltage, say -V1, is applied to each micro wire electrode of the bottom substrate. This is indicated in figure 13b by the first`+' or the first '-' drawn in an electrode. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrate are transparent, the transparency of light modulator 10 will increase. Likewise, if, e.g., the top substrate is transparent and the bottom substrate is reflective, the reflectivity of light modulator 10 will increase If the solution contains positively charged particles they will flow to the vicinity of the electrodes of the bottom substrate, where those particles will substantially align with the bottom electrodes.

A similar transparency or reflectivity can be achieved, when in a second instance, P2, of the on-state, the voltages of the top electrodes and bottom electrodes are reversed in contrast to the instance of P1. In the instance P2, the voltage of each electrode on of the top substrate are now supplied with a negative potential -V1 while the voltages of the aligned electrodes of the bottom substrate are supplied with a positive potential. This is indicated in figure 13b by the second `+' or the second '-' drawn in an electrode. This state is similar to the state shown in figure 13b, but with top and bottom substrates reversed. Also in this configuration the transparency or reflectivity of light modulator 10 is high.

Interestingly, by switching between a positive potential at electrodes at the top substrate, e.g., as shown as electrodes 13 in figure 13b (and a negative potential on electrodes 14), and a positive potential at electrodes at the bottom substrate, e.g., as shown as electrodes 14 in figure 13b, the transparency or reflectivity can be maintained, while decreasing corrosion damage to the electrodes. This alternating electric field can be achieved by applying alternating electric potentials to the top and bottom electrodes. The alternating field is indicated in figure 12 by '+/-' or '-/+' drawn in an electrode, showing how the potential on an electrode alternates between different voltages. The alternating potential on an electrode may for example, be obtained from alternating current (AC).

Applying a waveform is optional, but it is a useful measure to increase the lifetime of the light modulator by reducing corrosion. Corrosion can form for example, when using copper electrodes since copper ions dissolve in an ionic fluid at one substrate and flow to electrode on the opposite substrate, where they deposit. By applying a waveform the direction of copper ion transport is frequently reversed, thus reducing corrosion damage. Between the two instances P1 and P2 the corrosion current between the two substrates is balanced or substantially, e.g., >95%, balanced, e.g., as corrosion rate of an electrode of the top plate occurs there is a balancing deposition of copper on the bottom electrode between each instance of time, P1 and vice versa in instance P2. Therefore, the particles are transitioning or migrating continuously between top and bottom electrode, and the light modulator or smart window is always in the on-state while the dynamic electrolysis current between the top and bottom electrode is constant thus there is no or a negligible net loss of electrode material on the top and bottom substrates.

**Figure 13c** shows how a state of decreased transparency or reflectivity can be obtained. An alternating voltage is applied on the same substrate. For example, in an embodiment a potential +V2 is applied a first electrode and the next immediate neighboring electrode has an opposite potential -V2 etc., as shown in fig. 13c. This is indicated in figure 13c by the first `+' or the first '-' drawn in an electrode. This can be obtained by applying the potential +V2 to electrode 14a and the opposite potential -V2 to electrode 14b. On the opposite substrate the potential +V2 may be applied to electrode 15a and the opposite potential -V2 to electrode 15b. For example, the electrodes may be arranged so that the electrodes on the substrates are aligned; an electrode on the top substrate having an opposite electrode on the bottom substrate, and vice versa. A similar transparency or reflectivity can be achieved, when in a second instance, the voltages of the top electrodes and bottom electrodes are reversed. This is indicated in figure 13c by the second `+' or the second '-' drawn in an electrode. In figure 2c, the potential on the electrodes may alternative between positive and negative as indicated by the '+/-' and `-/+' indicated on the electrodes.

For example, to decrease transparency or reflectivity, the opposite electrode may receive the same potential, while neighboring electrodes receive an opposite potential. An embodiment is shown in figure 13c, wherein four electrodes are indicated with the reference numbers 14a, 14b, 15a and 15b, and the rest of the electrodes continue to alternate.

By using this AC drive cycle between top and bottom substrates, diagonal and lateral electric fields are generated between the two substrates thereby causing haphazard diffusion of the particles thereby creating the closed state of the light modulator. As a result of this configuration, the particles migrate diagonally and laterally between the top and bottom substrate and diffusion of particles into the visible aperture of the light modulator contributes to the closed, opaque state of the light modulator.

As for the transparent state shown in figure 13b, a waveform may be applied to the electrodes, e.g., so that electrodes that are shown in figure 13b with a positive potential become negative and vice versa. As in figure 13b applying a waveform, e.g., between electrodes 14a and 14b and between 15a and 15b reduces corrosion damage to the electrodes.

The AC drive cycle may be implemented by using an interdigitated line configuration combining the top and bottom electrode configuration shown in plan view in figures 5, 6a-6d, etc.

The extent with which transparency or reflectivity is increased or decreased in figures 13b and 13c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grey-scale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non- reflective may be obtained.

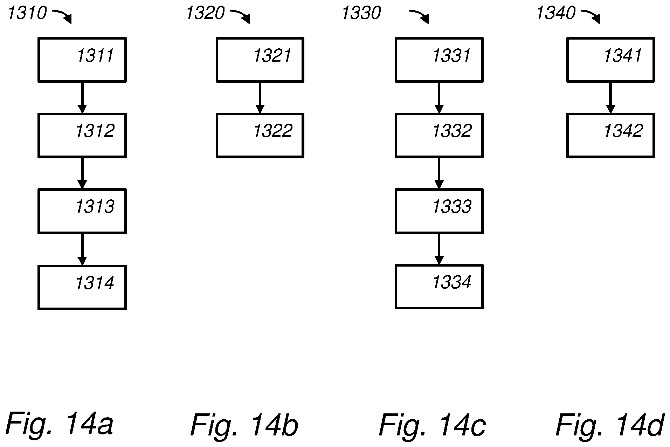

**Figure 14a** schematically shows an example of an embodiment of a method 1310 of manufacturing a substrate. The substrate is for use in a light modulator, such as used in dynamic glazing. Method 1310 comprises
- providing (1311) a substrate
- applying (1312) a first mesh electrodes of multiple mesh electrodes on the substrate,
- applying (1313) a second mesh electrode of the multiple mesh electrodes interlaced with the first mesh electrode, and
- creating (1314) a plurality of crossing points spread across the substrate where the first and second mesh electrodes of the multiple mesh electrodes cross on the substrate.

The multiple interlaced mesh electrodes extend in a two-dimensional pattern across the substrate. The plurality of crossing points may be created during the applying of the mesh electrodes. At a crossing point a dielectric or other current controlling component may be applied to control current flowing between the first and second mesh electrode.

Although in some embodiments, a mesh electrode is applied without interruption. It is not necessary that a mesh electrode is applied all at once; a mesh electrode may be applied in parts. For example, a mesh electrode may be built op from a multiple of main lines and interconnections. For example, **figure 14b** shows an embodiment in which a mesh electrode is built up from main lines and interconnecting lines. Method 1320 comprises
- applying (1321) multiple main lines of the multiple mesh electrodes to the substrate, the multiple main lines of the multiple electrodes being arranged alternatingly with respect to each other on the substrate,
- applying (1322) multiple interconnecting lines on the substrate electrically connecting the multiple main lines, an electrode of the multiple electrodes comprises multiple interconnections electrically connecting the main lines of said mesh electrode together, wherein multiple main lines of the electrode are connected to other main lines through multiple interconnections.

Applying the mesh electrodes, and/or the main lines, and/or the interconnecting lines and/or current controlling components, may be done by patterning. Direct printing may also be used, especially for interconnecting lines and current controlling components such as dielectrics

A light modulator may be manufactured from two or more substrates according to an embodiment. For example, **figure 14c** shows an embodiment in which a light-modulator is built up from substrates according to an embodiment. Method 1330 comprises:
- providing (1331) a first substrate and a second substate facing each other, multiple interlaced mesh electrodes extending in a two-dimensional pattern across the first substrate and across the second substrate, two mesh electrodes of the multiple mesh electrodes on a substrate crossing at a plurality of crossing points spread across the substrate,
- arranging (1332) an optical layer between the first and second substrates, the optical layer comprising a fluid comprising particles, wherein the particles are electrically charged or chargeable,
- cutting (1333) a shape from the assembled first substrate, second substrate and optical layer, and
- closing (1334) the edges of the cut shape.

Cutting the shape is optional. For example, the light modulator may directly be manufactured in the desired shape. However, cutting allows the light modulator to be built according to a default configuration after which its shape can be modified. After or during the cutting of the light modulator, its edges may be closed to keep the fluid in the optical layer.

A light modulator using substrates according to an embodiment is advantageously used for dynamic glazing. For example, **figure 14d** shows an embodiment in which the dynamic glazing is operated to produce dynamic optical properties. Method 1340 comprises:
- providing (1341) a light modulator according to an embodiment, and
- selecting (1342) an alternating current or voltage, and applying the alternating current or voltage to the electrodes to obtain an electric field between the electrodes providing electrophoretic movement of the particles towards or from an electrode, causing modulation of the optical properties of the light modulator.

For example, a controller may be connected to the multiple mesh electrodes on the substrates. The controller may be configured to select an alternating current or voltage based on user inputs, e.g., an input indicating a desired optical property, e.g., a desired transparency, a program indicating a desired optical property say for a time of day, sensor inputs, e.g., sensors in the light modulator, e.g., sensor for incident light, ambient light, etc., e.g., incident sunlight, e.g., ambient room lighting, etc. e.g., sensor for the current on the mesh electrodes. For example, a software program executed by the controller may select, e.g., look-up or compute, an appropriate driving signal to drive the light modulator closer to a new state and/or to maintain a current state. The selected driving signal may be applied by a current controller or a voltage controller, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Driving the electrodes may use a signal with a selected maximum amplitude, which corresponds to one of multiple levels of transparency or reflectivity in the light modulator. The signal may be alternating current or alternating voltage.

Embodiments of the method may be executed using software, which comprises instructions for causing a processor system to perform a driving method, such a method 1340. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

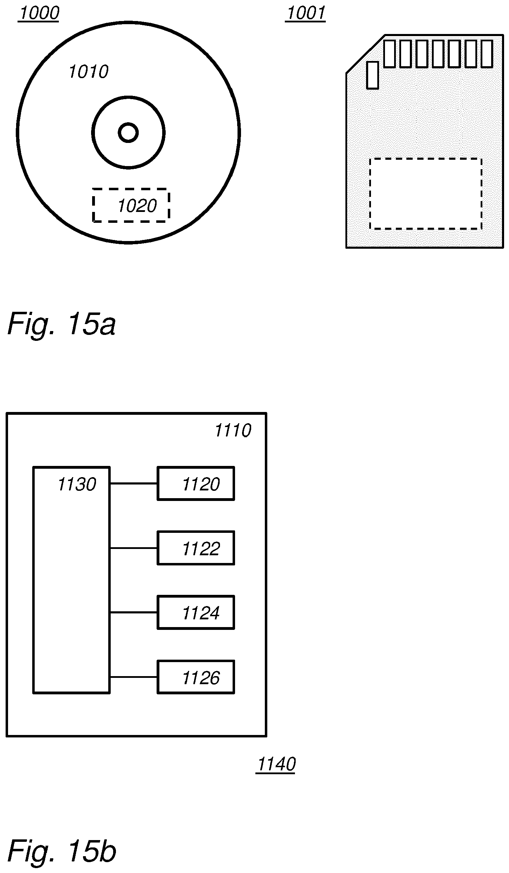

**Figure 15a** shows a computer readable medium 1000 and 1001 having a writable part 1010 comprising a computer program 1020, the computer program 1020 comprising instructions for causing a processor system to perform a light modulator method, according to an embodiment. For example, a processor system may be connected to a light modulator. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. For example, the computer readable medium may be an electronic memory such as an electronic memory device, e.g., an electronic memory card as shown at 1001. The computer program 1020 comprises instructions for causing a processor system to perform said light modulator method.

**Figure 15b** shows in a schematic representation of a processor system 1140 according to an embodiment of a controller for a light modulator. The processor system comprises one or more integrated circuits 1110. The architecture of the one or more integrated circuits 1110 is schematically shown in Figure 15b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

A controller for a light modulator, e.g., to control voltages applied to electrodes may comprise a processor circuit, but may also or instead comprise a state machine.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A substrate (200) for use in an electrophoretic light modulator, the substrate comprising:
- multiple interlaced mesh electrodes (210, 230) extending in a two-dimensional pattern across the substrate, at least two mesh electrodes of the multiple mesh electrodes on the substrate crossing at a plurality of crossing points (251) spread across the substrate, wherein the at least two mesh electrodes on the substrate each comprise multiple main lines extending in a first direction across the substrate, the multiple main lines of the at least two mesh electrodes being arranged alternatingly with respect to each other on the substrate, each of the at least two mesh electrodes comprising
- multiple interconnecting lines (221-223) electrically connecting the multiple main lines of the mesh electrode together, the multiple main lines of the mesh electrode being connected through the multiple interconnecting lines, the multiple interconnecting lines of the mesh electrode crossing with another mesh electrode on the substrate forming the plurality of crossing points, the multiple mesh electrodes being configured for an electric potential applied to the multiple mesh electrodes to obtain an electric field between the multiple mesh electrodes to provide electrophoretic movement of particles.

2. An electrophoretic light modulator, the light modulator comprising:
- a first substrate and a second substrate according to Claim 1, the first substrate and the second substrate facing each other,
- an optical layer between the first and second substrates, the optical layer comprising a fluid comprising particles, wherein the particles are electrically charged or chargeable;
- a controller configured to apply an electric potential to the multiple mesh electrodes to obtain an electric field between the multiple mesh electrodes providing electrophoretic movement of the particles towards or from one of the multiple mesh electrodes causing modulation of the optical properties of the light modulator.

3. The light modulator as in Claim 2, wherein the controller is electrically connected to the multiple mesh electrodes on one or more of the first and second substrates from a connecting area on the substrate to minimize potential differences between the multiple mesh electrodes.

4. The light modulator as in Claim 2 or 3, wherein
- at least two of the multiple main lines comprise at least two of the multiple interconnecting lines, and/or
- one of the multiple main lines is connected to at least 2 interconnecting lines, and/or
- one of the multiple main lines is connected to an interconnecting line within distance of an edge of the respective substrate, the distance being less than 10% of a main line length.

5. The light modulator as in any one of Claims 2-4, wherein the plurality of crossing points is distributed randomly across the first and/or second substrate.

6. The light modulator as in any one of Claims 2-5, wherein one or more of the multiple main lines and/or the multiple interconnecting lines are straight, or are wavy.

7. The light modulator as in any one of Claims 2-6, wherein the two-dimensional pattern of a mesh electrode of the multiple mesh electrodes across the first and/or second substrate comprises a regular triangle tiling, square tiling, or hexagonal tiling.

8. The light modulator as in any one of Claims 2-7, wherein the first and second substrates are cut into a non-rectangular shape.

9. The light modulator as in any one of Claims 2-8, wherein the first and/or second substrate comprises a current controlling component at a crossing point of the plurality of crossing points, wherein
- the current controlling component comprises a dielectric at the crossing point, electrically isolating the at least two mesh electrodes on the respective substrate from each other at the crossing point, or
- the current controlling component is configured to pass current for a high threshold of positive and negative voltages between the at least two mesh electrodes on the respective substrate at the crossing point and else to block current between the at least two mesh electrodes.

10. The light modulator as in any one of Claims 2-9, comprising a current controlling component between a first mesh electrode of the at least two mesh electrodes on the first substrate and a second mesh electrode of the at least two mesh electrodes on the second substrate, the current controlling component controlling a current between the first and second mesh electrodes.

11. The light modulator as in Claim 10, wherein the current controlling component
- is a spacer, spacing the first and second substrate from each other, and/or
- is positioned on top of one of the plurality of crossing points.

12. The light modulator as in any one of Claims 2-11, wherein
- at least three mesh electrodes are applied to at least one of the first substrate and the second substrate, or
- at least three mesh electrodes are applied to both the first substrate and the second substrate.

13. The light modulator as in any one of Claims 2-12, wherein the at least two mesh electrodes on the first substrate and/or second substrate are arranged on a first side of the respective substrate and comprise multiple vias connecting the at least two mesh electrodes to a second side of the respective substrate, the vias being connectable to the controller.

14. The light modulator as in claim 13, wherein the vias are arranged in multiple groups of vias across the respective substrate, each of the at least two mesh electrodes on the respective substrate being connected to a via in a group of vias, the vias in a group of vias being at a distance of at most a lower spacing bound, the groups of vias being at a distance of at least a higher spacing bound.

15. The light modulator as in any one of Claims 2-14, wherein one or more mesh electrodes of the at least two mesh electrodes on the first substrate connect to a connecting point on the second substrate through a conductive spacer, and from the connecting point to the controller.

16. The light modulator as in any one of Claims 2-15, having a transparent state and a non-transparent state, or having a reflective state and a non-reflective state, the light modulator being configured to
- switch to the non-transparent state or to the non-reflective state by creating an alternating voltage on at least one of the first and second substrates, applying an alternating current between at least a first mesh electrode and a second mesh electrode of the multiple mesh electrodes on the first substrate and/or between a first mesh electrode and a second mesh electrode of the multiple mesh electrodes on the second substrate,
- switch to the transparent state or to the reflective state by creating an alternating voltage between the first and second substrates, applying an alternating current between a first mesh electrode of the multiple mesh electrodes on the first substrate and a first mesh electrode of the multiple mesh electrodes on the second substrate, and/or between a second mesh electrode of the multiple mesh electrodes on the first substrate and a second mesh electrode of the multiple mesh electrodes on the second substrate.

17. A dynamic glazing comprising the light modulator as in any of Claims 2-16.

18. A method of manufacturing a substrate (200) for use in an electrophoretic light modulator, the method comprising
- providing a substrate and applying multiple interlaced mesh electrodes (210, 230) on the substrate, the multiple interlaced mesh electrodes extending in a two-dimensional pattern across the substrate, at least two mesh electrodes of the multiple mesh electrodes on the substrate crossing at a plurality of crossing points (251) spread across the substrate wherein at least two mesh electrodes on the substrate each comprise multiple main lines extending in a first direction across the substrate, the multiple main lines of the at least two mesh electrodes being arranged alternatingly with respect to each other on the substrate, each of the at least two mesh electrodes comprising
- multiple interconnecting lines (221-223) electrically connecting the multiple main lines of the mesh electrode together, the multiple main lines of the mesh electrode being connected through the multiple interconnecting lines, the multiple interconnecting lines of the mesh electrode crossing with another mesh electrode on the substrate forming the plurality of crossing points, the multiple mesh electrodes being configured for an electric potential applied to the multiple mesh electrodes to obtain an electric field between the multiple mesh electrodes to provide electrophoretic movement of particles.

19. The method of manufacturing a substrate as in claim 18, comprising
- patterning multiple conductive interconnecting lines on the substrate, and coating the substrate with a dielectric, before applying the multiple-main lines, and
- connecting the multiple conductive main lines of a mesh electrode to the conductive interconnecting lines.

20. The method of manufacturing a substrate as claim 18, comprising
- applying current controlling components on the multiple conductive main lines,
- applying multiple interconnecting lines on top of the current controlling components, connecting the multiple conductive main lines into the multiple interlaced mesh electrodes on the substrate.

21. The method of manufacturing a substrate as in claim 18, comprising
- applying a first mesh electrode on the substrate
- applying current controlling components on the first mesh electrode,
- applying a second mesh electrode on the substrate, the second mesh electrode being isolated from the first mesh electrode through the current components.

22. The method of manufacturing a substrate as in claim 18, comprising
- coating the substrate with a first conductive layer and patterning the first conductive layer to form the multiple interconnecting lines,
- coating the substrate with a dielectric deposition and patterning to form isolating patches on top of the multiple interconnecting lines,
- coat the substrate with a second conductive layer, and
- pattern the first and second conductive layer to form the multiple mesh electrodes.

23. The method of manufacturing a substrate for use in a light modulator as in claim 18, comprising
- cutting a shape from the substrate.

24. A method of manufacturing an electrophoretic light modulator, comprising
- providing
- a first substrate and a second substrate according to Claim 1, the first substrate and the second substrate facing each other, and
- an optical layer between the first and second substrates, the optical layer comprising a fluid comprising particles, wherein the particles are electrically charged or chargeable.

25. The method of manufacturing a light modulator as in Claim 24, comprising
- providing an electric connector to both of the at least two mesh electrodes on the first and/or second substrate at a connection area.

26. The method of manufacturing a light modulator as in claim 24 or 25, comprising
- cutting a shape from the assembled first substrate, second substrate and optical layer, wherein cutting a shape optionally comprises cutting a hole in said assembly, and
- closing the edges of the cut shape.

27. A dynamic glazing method comprising:
- providing a light modulator according to any of Claims 2-16
- selecting an alternating current or voltage, and applying the alternating current or voltage to the multiple mesh electrodes to obtain an electric field between the multiple mesh electrodes providing electrophoretic movement of the particles towards or from an electrode, causing modulation of the optical properties of the light modulator.

28. A transitory or non-transitory computer readable medium comprising data representing instructions, which, when executed by a processor system, cause the processor system to perform the method according to claim 27.

## Patentansprüche

1. Ein Substrat (200) zur Verwendung in einem elektrophoretischen Lichtmodulator, wobei das Substrat Folgendes umfasst:
- mehrere vernetzte Gitterelektroden (210, 230), die sich in einem zweidimensionalen Muster über das Substrat erstrecken, wobei sich mindestens zwei Gitterelektroden der mehreren Gitterelektroden auf dem Substrat an einer Vielzahl von Kreuzungspunkten (251), die über das Substrat verteilt sind, kreuzen, wobei die mindestens zwei Gitterelektroden auf dem Substrat jeweils mehrere Hauptleitungen umfassen, die sich in einer ersten Richtung über das Substrat erstrecken, wobei die mehreren Hauptleitungen der mindestens zwei Gitterelektroden abwechselnd in Bezug zueinander auf dem Substrat angeordnet sind, wobei jede der mindestens zwei Gitterelektroden Folgendes umfasst:
- mehrere Verbindungsleitungen (221-223), die die mehreren Hauptleitungen der Gitterelektrode elektrisch miteinander verbinden, wobei die mehreren Hauptleitungen der Gitterelektrode durch die mehreren Verbindungsleitungen verbunden sind, wobei die mehreren Verbindungsleitungen der Gitterelektrode, die sich mit einer anderen Gitterelektrode auf dem Substrat kreuzen, die Vielzahl von Kreuzungspunkten bilden, wobei die mehreren Gitterelektroden für ein elektrisches Potential konfiguriert sind, das an die mehreren Gitterelektroden angelegt wird, um ein elektrisches Feld zwischen den mehreren Gitterelektroden zu erhalten, um elektrophoretische Bewegung von Partikeln bereitzustellen.

2. Ein elektrophoretischer Lichtmodulator, wobei der Lichtmodulator Folgendes umfasst:
- ein erstes Substrat und ein zweites Substrat nach Anspruch 1, wobei das erste Substrat und das zweite Substrat einander zugewandt sind,
- eine optische Schicht zwischen dem ersten und dem zweiten Substrat, wobei die optische Schicht eine Partikel umfassende Flüssigkeit umfasst, wobei die Partikel elektrisch geladen oder aufladbar sind;
- eine Steuereinheit, die konfiguriert ist zum Anlegen eines elektrischen Potentials an die mehreren Gitterelektroden, um ein elektrisches Feld zwischen den mehreren Gitterelektroden zu erhalten, das elektrophoretische Bewegung der Partikel zu einer der mehreren Gitterelektroden hin oder von ihr weg bereitstellt, was Modulation der optischen Eigenschaften des Lichtmodulators bewirkt.

3. Der Lichtmodulator nach Anspruch 2, wobei die Steuereinheit elektrisch mit den mehreren Gitterelektroden auf einem oder mehreren der ersten und zweiten Substrate von einem Verbindungsbereich auf dem Substrat aus verbunden ist, um Potentialdifferenzen zwischen den mehreren Gitterelektroden zu minimieren.

4. Der Lichtmodulator nach Anspruch 2 oder 3, wobei
- mindestens zwei der mehreren Hauptleitungen mindestens zwei der mehreren Verbindungsleitungen umfassen, und/oder
- eine der mehreren Hauptleitungen mit mindestens 2 Verbindungsleitungen verbunden ist, und/oder
- eine der mehreren Hauptleitungen mit einer Verbindungsleitung in einem Abstand von einer Kante des jeweiligen Substrats verbunden ist, wobei der Abstand weniger als 10 % der Länge einer Hauptleitung beträgt.

5. Der Lichtmodulator nach einem der Ansprüche 2-4, wobei die Vielzahl der Kreuzungspunkte zufällig über das erste und/oder zweite Substrat verteilt ist.

6. Der Lichtmodulator nach einem der Ansprüche 2-5, wobei eine oder mehrere der mehreren Hauptleitungen und/oder der mehreren Verbindungsleitungen gerade sind, oder gewellt sind.

7. Der Lichtmodulator nach einem der Ansprüche 2-6, wobei das zweidimensionale Muster einer Gitterelektrode der mehreren Gitterelektroden über dem ersten und/oder dem zweiten Substrat eine regelmäßige Dreieckskachel, eine Quadratkachel, oder eine Hexagonalkachel umfasst.

8. Der Lichtmodulator nach einem der Ansprüche 2-7, wobei das erste und das zweite Substrat in eine nicht-rechteckige Form geschnitten sind.

9. Der Lichtmodulator nach einem der Ansprüche 2-8, wobei das erste und/oder zweite Substrat eine stromregelnde Komponente an einem Kreuzungspunkt der Vielzahl von Kreuzungspunkten umfasst, wobei
- die stromregelnde Komponente am Kreuzungspunkt ein Dielektrikum umfasst, das die mindestens zwei Gitterelektroden auf dem jeweiligen Substrat am Kreuzungspunkt elektrisch voneinander isoliert, oder
- die stromregelnde Komponente konfiguriert ist zum Durchlassen Stroms bei einem hohen Schwellenwert positiver und negativer Spannungen zwischen den mindestens zwei Gitterelektroden auf dem jeweiligen Substrat am Kreuzungspunkt, und ansonsten zum Sperren Stroms zwischen den mindestens zwei Gitterelektroden.

10. Der Lichtmodulator nach einem der Ansprüche 2-9, umfassend eine stromregelnde Komponente zwischen einer ersten Gitterelektrode der mindestens zwei Gitterelektroden auf dem ersten Substrat und einer zweiten Gitterelektrode der mindestens zwei Gitterelektroden auf dem zweiten Substrat, wobei die stromregelnde Komponente einen Strom zwischen der ersten und der zweiten Gitterelektrode regelt.

11. Der Lichtmodulator nach Anspruch 10, wobei die stromregelnde Komponente
- ein Abstandshalter ist, der das erste und zweite Substrat voneinander beabstandet, und/oder
- auf der Oberseite eines der Vielzahl von Kreuzungspunkten angeordnet ist.

12. Der Lichtmodulator nach einem der Ansprüche 2-11, wobei
- mindestens drei Gitterelektroden auf mindestens einem der ersten und der zweiten Substrat aufgebracht sind, oder
- mindestens drei Gitterelektroden sowohl auf dem ersten Substrat als auch auf dem zweiten Substrat aufgebracht sind.

13. Der Lichtmodulator nach einem der Ansprüche 2-12, wobei die mindestens zwei Gitterelektroden auf dem ersten Substrat und/oder dem zweiten Substrat auf einer ersten Seite des jeweiligen Substrats angeordnet sind und mehrere Durchkontaktierungen umfassen, die die mindestens zwei Gitterelektroden mit einer zweiten Seite des jeweiligen Substrats verbinden, wobei die Durchkontaktierungen mit der Steuereinheit verbindbar sind.

14. Der Lichtmodulator nach Anspruch 13, wobei die Durchkontaktierungen in mehreren Gruppen von Durchkontaktierungen quer über das jeweilige Substrat angeordnet sind, wobei jede der mindestens zwei Gitterelektroden auf dem jeweiligen Substrat mit einer Durchkontaktierung in einer Gruppe von Durchkontaktierungen verbunden ist, wobei die Durchkontaktierungen in einer Gruppe von Durchkontaktierungen in einem Abstand von höchstens einer unteren Abstandsgrenze liegen, wobei die Gruppen von Durchkontaktierungen in einem Abstand von mindestens einer höheren Abstandsgrenze liegen.

15. Der Lichtmodulator nach einem der Ansprüche 2-14, wobei eine oder mehrere Gitterelektroden der mindestens zwei Gitterelektroden auf dem ersten Substrat über einen leitenden Abstandshalter mit einem Verbindungspunkt auf dem zweiten Substrat, und von dem Verbindungspunkt mit der Steuereinheit verbunden sind.

16. Der Lichtmodulator nach einem der Ansprüche 2-15, mit einem transparenten Zustand und einem nicht-transparenten Zustand, oder mit einem reflektierenden Zustand und einem nicht-reflektierenden Zustand, wobei der Lichtmodulator konfiguriert ist zum
- Schalten in den nicht-transparenten Zustand oder in den nicht-reflektierenden Zustand durch Erzeugen einer Wechselspannung auf mindestens einem der ersten und zweiten Substrate, Anlegen eines Wechselstroms zwischen mindestens einer ersten Gitterelektrode und einer zweiten Gitterelektrode der mehreren Gitterelektroden auf dem ersten Substrat und/oder zwischen einer ersten Gitterelektrode und einer zweiten Gitterelektrode der mehreren Gitterelektroden auf dem zweiten Substrat,
- Schalten in den transparenten Zustand oder in den reflektierenden Zustand durch Erzeugen einer Wechselspannung zwischen dem ersten und dem zweiten Substrat, Anlegen eines Wechselstroms zwischen einer ersten Gitterelektrode der mehreren Gitterelektroden auf dem ersten Substrat und einer ersten Gitterelektrode der mehreren Gitterelektroden auf dem zweiten Substrat und/oder zwischen einer zweiten Gitterelektrode der mehreren Gitterelektroden auf dem ersten Substrat und einer zweiten Gitterelektrode der mehreren Gitterelektroden auf dem zweiten Substrat.

17. Eine dynamische Verglasung, umfassend den Lichtmodulator nach einem der Ansprüche 2-16.

18. Ein Verfahren zur Herstellung eines Substrats (200) zur Verwendung in einem elektrophoretischen Lichtmodulator, wobei das Verfahren
Folgendes umfasst:
- Bereitstellen eines Substrats und Aufbringen mehrerer vernetzter Gitterelektroden (210, 230) auf dem Substrat, wobei sich die mehreren vernetzten Gitterelektroden in einem zweidimensionalen Muster über das Substrat erstrecken, wobei sich mindestens zwei Gitterelektroden der mehreren Gitterelektroden auf dem Substrat an einer Vielzahl von Kreuzungspunkten (251), die über das Substrat verteilt sind, kreuzen, wobei mindestens zwei Gitterelektroden auf dem Substrat jeweils mehrere Hauptleitungen umfassen, die sich in einer ersten Richtung über das Substrat erstrecken, wobei die mehreren Hauptleitungen der mindestens zwei Gitterelektroden abwechselnd in Bezug zueinander auf dem Substrat angeordnet sind, wobei jede der mindestens zwei Gitterelektroden Folgendes umfasst:
- mehrere Verbindungsleitungen (221-223), die die mehreren Hauptleitungen der Gitterelektrode elektrisch miteinander verbinden, wobei die mehreren Hauptleitungen der Gitterelektrode durch die mehreren Verbindungsleitungen verbunden sind, wobei die mehreren Verbindungsleitungen der Gitterelektrode, die sich mit einer anderen Gitterelektrode auf dem Substrat kreuzen, die Vielzahl von Kreuzungspunkten bilden, wobei die mehreren Gitterelektroden für ein elektrisches Potential konfiguriert sind, das an die mehreren Gitterelektroden angelegt wird, um ein elektrisches Feld zwischen den mehreren Gitterelektroden zu erhalten, um elektrophoretische Bewegung von Partikeln bereitzustellen.

19. Das Verfahren zur Herstellung eines Substrats nach Anspruch 18, umfassend
- Strukturieren mehrerer leitender Verbindungsleitungen auf dem Substrat, und Beschichten des Substrats mit einem Dielektrikum, vor dem Aufbringen der mehreren Hauptleitungen, und
- Verbinden der mehreren leitenden Hauptleitungen einer Gitterelektrode mit den leitenden Verbindungsleitungen.

20. Das Verfahren zur Herstellung eines Substrats nach Anspruch 18, umfassend
- Aufbringen von stromregelnden Komponenten auf den mehreren leitenden Hauptleitungen,
- Aufbringen mehrerer Verbindungsleitungen auf der Oberseite der stromregelnden Komponenten, die die mehreren leitenden Hauptleitungen mit den mehreren vernetzten Gitterelektroden auf dem Substrat verbinden.

21. Das Verfahren zur Herstellung eines Substrats nach Anspruch 18, umfassend
- Aufbringen einer ersten Gitterelektrode auf das Substrat
- Aufbringen von stromregelnden Komponenten auf die erste Gitterelektrode,
- Aufbringen einer zweiten Gitterelektrode auf das Substrat, wobei die zweite Gitterelektrode von der ersten Gitterelektrode durch die Stromkomponenten isoliert ist.

22. Das Verfahren zur Herstellung eines Substrats nach Anspruch 18, umfassend
- Beschichten des Substrats mit einer ersten leitenden Schicht und Strukturieren der ersten leitenden Schicht, um die mehreren Verbindungsleitungen zu bilden,
- Beschichten des Substrats mit einer dielektrischen Ablagerung und Strukturierung, um isolierende Flecken auf der Oberseite der mehreren Verbindungsleitungen zu bilden,
- Beschichten des Substrats mit einer zweiten leitenden Schicht, und
- Strukturieren der ersten und zweiten leitenden Schicht, um die mehreren Gitterelektroden zu bilden.

23. Das Verfahren zur Herstellung eines Substrats zur Verwendung in einem Lichtmodulator nach Anspruch 18, umfassend
- Schneiden einer Form aus dem Substrat.

24. Ein Verfahren zur Herstellung eines elektrophoretischen Lichtmodulators, umfassend
- Bereitstellen
- eines ersten Substrats und eines zweiten Substrats nach Anspruch 1, wobei das erste Substrat und das zweite Substrat einander zugewandt sind, und
- einer optischen Schicht zwischen den ersten und zweiten Substraten, wobei die optische Schicht eine Partikel umfassende Flüssigkeit umfasst, wobei die Partikel elektrisch geladen oder aufladbar sind.

25. Das Verfahren zur Herstellung eines Lichtmodulators nach Anspruch 24, umfassend
- Bereitstellen eines elektrischen Verbinders an beiden der mindestens zwei Gitterelektroden auf dem ersten und/oder zweiten Substrat in einem Verbindungsbereich.

26. Das Verfahren zur Herstellung eines Lichtmodulators nach Anspruch 24 oder 25, umfassend
- Schneiden einer Form aus dem zusammengesetzten ersten Substrat, zweiten Substrat und der optischen Schicht, wobei Schneiden einer Form gegebenenfalls Schneiden eines Lochs in die Anordnung umfasst, und
- Schließen der Kanten der geschnittenen Form.

27. Ein dynamisches Verglasungsverfahren, umfassend:
- Bereitstellen eines Lichtmodulators nach einem der Ansprüche 2-16
- Auswählen eines Wechselstroms oder einer Wechselspannung und Anlegen des Wechselstroms oder der Wechselspannung an die mehreren Gitterelektroden, um ein elektrisches Feld zwischen den mehreren Gitterelektroden zu erhalten, das elektrophoretische Bewegung der Partikel zu einer Elektrode hin oder von ihr weg bereitstellt, was Modulation der optischen Eigenschaften des Lichtmodulators bewirkt.

28. Ein flüchtiges oder nichtflüchtiges computerlesbares Medium, umfassend Daten, die Anweisungen darstellen, die, wenn sie von einem Prozessorsystem ausgeführt werden, das Prozessorsystem veranlassen, das Verfahren nach Anspruch 27 durchzuführen.

## Revendications

1. Un substrat (200) pour utilisation dans un modulateur de lumière électrophorétique, le substrat comprenant :
- de multiples électrodes à mailles entrelacées (210, 230) s'étendant en un motif bidimensionnel sur le substrat, au moins deux électrodes à mailles des multiples électrodes à mailles sur le substrat se croisant en une pluralité de points d'intersection (251) répartis sur le substrat, dans lequel les au moins deux électrodes à mailles sur le substrat comprennent chacune de multiples lignes principales s'étendant dans une première direction sur le substrat, les multiples lignes principales des au moins deux électrodes à mailles étant agencées en alternance les unes par rapport aux autres sur le substrat, chacune des au moins deux électrodes à mailles comprenant
- de multiples lignes d'interconnexion (221-223) connectant électriquement les multiples lignes principales de l'électrode à mailles les unes aux autres, les multiples lignes principales de l'électrode à mailles étant connectées par l'intermédiaire des multiples lignes d'interconnexion, les multiples lignes d'interconnexion de l'électrode à mailles croisant une autre électrode à mailles sur le substrat formant la pluralité de points d'intersection, les multiples électrodes à mailles étant configurées pour un potentiel électrique appliqué aux multiples électrodes à mailles pour obtenir un champ électrique entre les multiples électrodes à mailles pour fournir du mouvement électrophorétique de particules.

2. Un modulateur de lumière électrophorétique, le modulateur de lumière comprenant :
- un premier substrat et un second substrat selon la revendication 1, le premier substrat et le second substrat étant en regard l'un de l'autre,
- une couche optique entre les premier et second substrats, la couche optique comprenant un fluide comprenant des particules, dans lequel les particules sont chargées ou peuvent être chargées électriquement ;
- un dispositif de commande configuré pour appliquer un potentiel électrique aux multiples électrodes à mailles pour obtenir un champ électrique entre les multiples électrodes à mailles fournissant du mouvement électrophorétique des particules vers ou à partir de l'une des multiples électrodes à mailles provoquant de la modulation des propriétés optiques du modulateur de lumière.

3. Le modulateur de lumière selon la revendication 2, dans lequel le dispositif de commande est connecté électriquement aux multiples électrodes à mailles sur un ou plusieurs des premier et second substrats à partir d'une zone de connexion sur le substrat pour réduire au minimum des différences de potentiel entre les multiples électrodes à mailles.

4. Le modulateur de lumière selon la revendication 2 ou 3, dans lequel
- au moins deux des multiples lignes principales comprennent au moins deux des multiples lignes d'interconnexion, et/ou
- une des multiples lignes principales est connectée à au moins 2 lignes d'interconnexion, et/ou
- une des multiples lignes principales est connectée à une ligne d'interconnexion à une distance d'un bord du substrat respectif, la distance étant inférieure à 10 % d'une longueur de ligne principale.

5. Le modulateur de lumière selon l'une quelconque des revendications 2-4, dans lequel la pluralité de points d'intersection est répartie aléatoirement sur les premier et/ou second substrats.

6. Le modulateur de lumière selon l'une quelconque des revendications 2-5, dans lequel une ou plusieurs des multiples lignes principales et/ou des multiples lignes d'interconnexion sont droites, ou sont ondulées.

7. Le modulateur de lumière selon l'une quelconque des revendications 2-6, dans lequel le motif bidimensionnel d'une électrode à mailles des multiples électrodes à mailles sur les premier et/ou second substrats comprend un pavage régulier de triangles, un pavage régulier de carrés, ou un pavage régulier d'hexagones.

8. Le modulateur de lumière selon l'une quelconque des revendications 2-7, dans lequel les premier et second substrats sont découpés en une forme non rectangulaire.

9. Le modulateur de lumière selon l'une quelconque des revendications 2-8, dans lequel les premier et/ou second substrats comprennent un composant de commande de courant en un point d'intersection de la pluralité de points d'intersection, dans lequel
- le composant de commande de courant comprend un diélectrique au point d'intersection, isolant électriquement les au moins deux électrodes à mailles sur le substrat respectif l'une de l'autre au point d'intersection, ou
- le composant de commande de courant est configuré pour faire passer du courant pour un seuil élevé de tensions positives et négatives entre les au moins deux électrodes à mailles sur le substrat respectif au point d'intersection, et sinon pour bloquer du courant entre les au moins deux électrodes à mailles.

10. Le modulateur de lumière selon l'une quelconque des revendications 2-9, comprenant un composant de commande de courant entre une première électrode à mailles des au moins deux électrodes à mailles sur le premier substrat et une seconde électrode à mailles des au moins deux électrodes à mailles sur le second substrat, le composant de commande de courant commandant un courant entre les première et seconde électrodes à mailles.

11. Le modulateur de lumière selon la revendication 10, dans lequel le composant de commande de courant
- est un espaceur, espaçant les premier et second substrats l'un de l'autre, et/ou
- est positionné sur l'un de la pluralité de points d'intersection.

12. Le modulateur de lumière selon l'une quelconque des revendications 2-11, dans lequel
- au moins trois électrodes à mailles sont appliquées sur au moins l'un du premier substrat et du second substrat, ou
- au moins trois électrodes à mailles sont appliquées à la fois sur le premier substrat et le second substrat.

13. Le modulateur de lumière selon l'une quelconque des revendications 2-12, dans lequel les au moins deux électrodes à mailles sur le premier substrat et/ou le second substrat sont agencées d'un premier côté du substrat respectif et comprennent de multiples trous d'interconnexion connectant les au moins deux électrodes à mailles à un second côté du substrat respectif, les trous d'interconnexion pouvant être connectés au dispositif de commande.

14. Le modulateur de lumière selon la revendication 13, dans lequel les trous d'interconnexion sont agencés en de multiples groupes de trous d'interconnexion sur le substrat respectif, chacune des au moins deux électrodes à mailles sur le substrat respectif étant connectée à un trou d'interconnexion dans un groupe de trous d'interconnexion, les trous d'interconnexion dans un groupe de trous d'interconnexion étant à une distance d'au plus une limite d'espacement inférieure, les groupes de trous d'interconnexion étant à une distance d'au moins une limite d'espacement supérieure.

15. Le modulateur de lumière selon l'une quelconque des revendications 2-14, dans lequel une ou plusieurs électrodes à mailles des au moins deux électrodes à mailles sur le premier substrat se connectent à un point de connexion sur le second substrat par l'intermédiaire d'un espaceur conducteur, et du point de connexion au dispositif de commande.

16. Le modulateur de lumière selon l'une quelconque des revendications 2-15, présentant un état transparent et un état non transparent, ou présentant un état réfléchissant et un état non réfléchissant, le modulateur de lumière étant configuré pour
- passer à l'état non transparent ou à l'état non réfléchissant par création d'une tension alternative sur au moins l'un des premier et second substrats, en appliquant un courant alternatif entre au moins une première électrode à mailles et une seconde électrode à mailles des multiples électrodes à mailles sur le premier substrat et/ou entre une première électrode à mailles et une seconde électrode à mailles des multiples électrodes à mailles sur le second substrat,
- passer à l'état transparent ou à l'état réfléchissant par création d'une tension alternative entre les premier et second substrats, en appliquant un courant alternatif entre une première électrode à mailles des multiples électrodes à mailles sur le premier substrat et une première électrode à mailles des multiples électrodes à mailles sur le second substrat, et/ou entre une seconde électrode à mailles des multiples électrodes à mailles sur le premier substrat et une seconde électrode à mailles des multiples électrodes à mailles sur le second substrat.

17. Un vitrage dynamique comprenant le modulateur de lumière selon l'une quelconque des revendications 2-16.

18. Un procédé de fabrication d'un substrat (200) pour utilisation dans un modulateur de lumière électrophorétique, le procédé
comprenant
- la fourniture d'un substrat et l'application de multiples électrodes à mailles entrelacées (210, 230) sur le substrat, les multiples électrodes à mailles entrelacées s'étendant en un motif bidimensionnel sur le substrat, au moins deux électrodes à mailles des multiples électrodes à mailles sur le substrat se croisant en une pluralité de points d'intersection (251) répartis sur le substrat, dans lequel au moins deux électrodes à mailles sur le substrat comprennent chacune de multiples lignes principales s'étendant dans une première direction sur le substrat, les multiples lignes principales des au moins deux électrodes à mailles étant agencées en alternance les unes par rapport aux autres sur le substrat, chacune des au moins deux électrodes à mailles comprenant
- de multiples lignes d'interconnexion (221-223) connectant électriquement les multiples lignes principales de l'électrode à mailles les unes aux autres, les multiples lignes principales de l'électrode à mailles étant connectées par l'intermédiaire des multiples lignes d'interconnexion, les multiples lignes d'interconnexion de l'électrode à mailles croisant une autre électrode à mailles sur le substrat formant la pluralité de points d'intersection, les multiples électrodes à mailles étant configurées pour un potentiel électrique appliqué aux multiples électrodes à mailles pour obtenir un champ électrique entre les multiples électrodes à mailles pour fournir du mouvement électrophorétique de particules.

19. Le procédé de fabrication d'un substrat selon la revendication 18, comprenant
- la formation d'un motif de multiples lignes d'interconnexion conductrices sur le substrat, et le revêtement du substrat avec un diélectrique, avant d'appliquer les multiples lignes principales, et
- la connexion des multiples lignes principales conductrices d'une électrode à mailles aux lignes d'interconnexion conductrices.

20. Le procédé de fabrication d'un substrat selon la revendication 18, comprenant
- l'application de composants de commande de courant sur les multiples lignes principales conductrices,
- l'application de multiples lignes d'interconnexion sur les composants de commande de courant, connectant les multiples lignes principales conductrices dans les multiples électrodes à mailles entrelacées sur le substrat.

21. Le procédé de fabrication d'un substrat selon la revendication 18, comprenant
- l'application d'une première électrode à mailles sur le substrat
- l'application de composants de commande de courant sur la première électrode à mailles,
- l'application d'une seconde électrode à mailles sur le substrat, la seconde électrode à mailles étant isolée de la première électrode à mailles par l'intermédiaire des composants de courant.

22. Le procédé de fabrication d'un substrat selon la revendication 18, comprenant
- le revêtement du substrat avec une première couche conductrice et la formation de motifs sur la première couche conductrice pour former les multiples lignes d'interconnexion,
- le revêtement du substrat avec un dépôt diélectrique et la formation de motifs pour former des secteurs isolants sur les multiples lignes d'interconnexion,
- le revêtement du substrat avec une seconde couche conductrice, et
- la formation de motifs sur les première et seconde couches conductrices pour former les multiples électrodes à mailles.

23. Le procédé de fabrication d'un substrat pour utilisation dans un modulateur de lumière selon la revendication 18, comprenant
- la découpe d'une forme à partir du substrat.

24. Un procédé de fabrication d'un modulateur de lumière électrophorétique, comprenant
- la fourniture
- d'un premier substrat et d'un second substrat selon la revendication 1, le premier substrat et le second substrat étant en regard l'un de l'autre, et
- d'une couche optique entre les premier et second substrats, la couche optique comprenant un fluide comprenant des particules, dans lequel les particules sont chargées ou peuvent être chargées électriquement.

25. Le procédé de fabrication d'un modulateur de lumière selon la revendication 24, comprenant
- la fourniture d'un connecteur électrique aux deux des au moins deux électrodes à mailles sur les premier et/ou second substrats au niveau d'une zone de connexion.

26. Le procédé de fabrication d'un modulateur de lumière selon la revendication 24 ou 25, comprenant
- la découpe d'une forme à partir du premier substrat, du second substrat et de la couche optique assemblés, dans lequel la découpe d'une forme comprend éventuellement la découpe d'un trou dans ledit ensemble, et
- la fermeture des bords de la forme découpée.

27. Un procédé de vitrage dynamique comprenant :
- la fourniture d'un modulateur de lumière selon l'une quelconque des revendications 2-16
- la sélection d'un courant alternatif ou d'une tension alternative, et l'application du courant alternatif ou de la tension alternative aux multiples électrodes à mailles pour obtenir un champ électrique entre les multiples électrodes à mailles fournissant du mouvement électrophorétique des particules vers ou à partir d'une électrode, provoquant de la modulation des propriétés optiques du modulateur de lumière.

28. Un support transitoire ou non transitoire lisible par ordinateur comprenant des données représentant des instructions, qui, lorsqu'elles sont exécutées par un système de processeur, amènent le système de processeur à effectuer le procédé selon la revendication 27.
